# FASCICULE DE BREVET EUROPEEN

(11) **EP 2 556 187 B1**
(45) Date de publication et mention de la délivrance du brevet: **06.05.2026**
(21) Numéro de dépôt: 11712275.4
(22) Date de dépôt: 06.04.2011
(51) Int. Cl.: D01D 5/00, C04B 35/624, C04B 35/622, C04B 35/634, C04B 35/626, H01M 4/86, H01M 4/90, H01M 8/1007, H01M 4/66

(54) **NANOFIBRES HYBRIDES ORGANIQUES-INORGANIQUES A PHASE INORGANIQUE MESOPOREUSE, LEUR PREPARATION PAR EXTRUSION ELECTRO-ASSISTEE, MEMBRANE, ELECTRODE, ET PILE A COMBUSTIBLE.**
ORGANISCH-ANORGANISCHE HYBDRIDNANOFASERN MIT EINER MESOPORÖSEN ANORGANISCHEN PHASE, IHRE HERSTELLUNG MITTELS ELEKTRISCH GESTÜTZTER EXTRUSION, MEMBRAN, ELEKTRODE UND BRENNSTOFFZELLE
ORGANIC-INORGANIC HYBRID NANOFIBRES HAVING A MESOPOROUS INORGANIC PHASE, PREPARATION THEREOF BY ELECTRICALLY ASSISTED EXTRUSION, MEMBRANE, ELECTRODE AND FUEL CELL

(30) Priorité: 06.04.2010 FR 1052577
(43) Date de publication de la demande: 13.02.2013
(73) Titulaire: Commissariat à l'Energie Atomique et aux Energies Alternatives, 75015 Paris (FR); Centre National de la Recherche Scientifique, 75016 Paris (FR); Université Pierre et Marie Curie (Paris 6), 75252 Paris Cedex 05 (FR)
(72) Inventeur: VALLE, Karine, F-37000 Tours (FR); BELLEVILLE, Philippe, F-37000 Tours (FR); PEREIRA, Franck, F-37260 Monts (FR); LABERTY, Chrystel, F-92120 Montrouge (FR); SANCHEZ, Clément, F-91440 Bures sur Yvette (FR); BASS, John, Union City CA 94587 (US)
(74) Mandataire: Santarelli
(86) Numéro de dépôt international: PCT/EP2011/055377
(87) Numéro de publication internationale: WO 2011/124622

(56) Documents cités:
- US-A1- 2003 168 756
- US-A1- 2006 293 169
- ROUQUEROL J ET AL: "RECOMMENDATIONS FOR THE CHARACTERIZATION OF POROUS SOLIDS", PURE & APPLIED CHEMISTRY, PERGAMON PRESS, OXFORD, GB, vol. 66, no. 8, 1 January 1994 (1994-01-01), pages 1739 - 1758, XP001208381, ISSN: 0033-4545
- SRINIVASAN DURAISWAMY ET AL: "Synthesis of novel micro- and mesoporous zeolite nanostructures using electrospinning techniques", JOURNAL OF ELECTRONIC MATERIALS, WARRENDALE, PA, US, vol. 35, no. 3, 1 March 2006 (2006-03-01), pages 504 - 509, XP008084666, ISSN: 0361-5235, DOI: 10.1007/BF02690538
- ZHAO ET AL: "Fabrication of refining mesoporous silica nanofibers via electrospinning", MATERIALS LETTERS, NORTH HOLLAND PUBLISHING COMPANY. AMSTERDAM, NL, vol. 62, no. 1, 15 November 2007 (2007-11-15), pages 143 - 146, XP022345464, ISSN: 0167-577X, DOI: 10.1016/J.MATLET.2007.04.096
- S. MADHUGIRI, A. DALTON, J. GUTIERREZ, J.P. FERRARIS, K.J. BALKUS JR: "Electrospun MEH-PPV/SBA-15 Composite Nanofibers Using a Dual Syringe Method", JOURNAL OF THE AMERICAN CHEMICAL SOCIETY, vol. 125, 31 October 2003 (2003-10-31), pages 14531 - 14538, XP002610366, DOI: 10.1021/ja030326i
- PEREIRA, F.A, VALLÉ, K.A , BELLEVILLE, P.A , MORIN, A.B , LAMBERTS, S.A , SANCHEZ, C.C: "Advanced mesostructured hybrid silica-nafion membranes for high-performance PEM fuel cell", CHEMISTRY OF MATERIALS, vol. 20, 16 February 2008 (2008-02-16), pages 1710 - 1718, XP002610367, DOI: 10.1021/cm070929j

## Description

### DOMAINE TECHNIQUE

La présente invention concerne des nanofibres hybrides organiques, inorganiques comprenant une phase inorganique, minérale, mésoporeuse, et une phase organique.

L'invention concerne, en outre, un procédé de préparation de ces nanofibres par extrusion électro-assistée (aussi appelée « Electrospinning » en langue anglaise).

L'invention concerne, en outre, une membrane et une électrode comprenant ces nanofibres.

L'invention a trait également à une pile à combustible comprenant au moins une telle membrane et/ou au moins une telle électrode.

Le domaine technique de l'invention peut être défini, de manière générale, comme celui des matériaux poreux plus particulièrement comme celui des matériaux dits mésoporeux et notamment comme celui des matériaux hybrides organiques-inorganiques mésoporeux.

Plus précisément, l'invention se situe dans le domaine des matériaux mésoporeux destinés à des utilisations en électrochimie, en particulier dans les piles à combustibles, telles que les « PEMFC » (« Polymeric Electrolyte Membrane Fuel Cell », en anglais) appelées aussi piles à combustible à membranes échangeuses protoniques.

### ÉTAT DE LA TECHNIQUE ANTÉRIEURE

On sait qu'un des éléments essentiels des piles à combustible, par exemple celles utilisées dans le secteur de l'automobile et de la téléphonie portable, est la membrane échangeuse protonique.

Ces membranes électrolytes structurent le cœur de la pile à combustible, et doivent par conséquent présenter de bonnes performances en conduction protonique, ainsi qu'une faible perméabilité aux gaz réactants (H_{2/}O₂). Les propriétés des matériaux qui constituent les électrolytes solides polymériques formant ces membranes et qui doivent résister à des milliers d'heures de fonctionnement de la pile, sont essentiellement la stabilité chimique, et la résistance à l'hydrolyse et à l'oxydation, notamment la résistance hydrothermale, et une certaine flexibilité mécanique.

Les membranes préparées à partir d'ionomères perfluorés, comme le Nafion^{®}, remplissent ces exigences pour des températures de fonctionnement inférieures à 90°C.

Cette température est cependant insuffisante pour permettre l'intégration des piles à combustible comprenant de telles membranes dans un véhicule. Cette intégration suppose en effet l'augmentation de la température de fonctionnement vers 100-150°C dans le but d'accroître le rendement de conversion courant/énergie et donc l'efficacité de la pile, de diminuer l'empoisonnement des catalyseurs par le monoxyde de carbone, mais également d'améliorer le contrôle de la gestion thermique en diminuant le volume du radiateur.

Par ailleurs, l'efficacité de conduction des membranes protoniques est fortement liée à la présence d'eau dans le milieu. Or, à des températures supérieures à 100°C, l'eau est rapidement évacuée de la membrane, la conductivité chute et la perméabilité au combustible s'accroît. A ces températures, cette diminution des performances peut s'accompagner d'une dégradation de la membrane. Pour résoudre les problèmes de dessèchement des membranes dans les piles à combustibles à haute température, à savoir au moins égale à 100°C, le maintien d'une humidité relative maximale de 80-100% est nécessaire mais est difficilement réalisable par une source externe.

Par contre, il est connu que l'insertion ou la croissance d'une charge hygroscopique « in situ » favorise la rétention d'eau à l'intérieur du polymère, retarde ce processus de déshydratation du milieu protonique, et assure ainsi la conduction des protons. Outre son caractère hydrophile, cette charge fonctionnelle peut posséder intrinsèquement des propriétés conductrices et ainsi accroître les performances de la membrane.

Afin d'augmenter la rétention d'eau des membranes dans les piles à combustibles à haute température, de nombreuses membranes composites ont été développées, notamment par croissance de nanoparticules inorganiques hydrophiles. Ces nano-charges minérales peuvent être synthétisées par voie sol-gel dans des matrices organiques sulfonées perfluorées, mais aussi dans des matrices constituées de composés polyaromatiques, ou de polyéthers. Ces membranes sont nommées présentement membranes hybrides organiques-inorganiques.

Les particules minérales peuvent être conductrices, ou bien non conductrices et simplement hydrophiles comme les oxydes de métaux et de métalloïdes.

Outre l'amélioration de la gestion de l'eau à haute température, la diminution de la perméabilité de la membrane aux combustibles est démontrée dans ces membranes hybrides organiques-inorganiques par rapport aux membranes classiques de type Nafion^{®} par exemple. La stabilité thermique et chimique reste toutefois limitée car inhérente à la matrice de polymère organique sulfoné utilisée.

Parallèlement aux matériaux composites ou hybrides organiques-inorganiques, décrits plus haut, les matériaux mésoporeux initialement imaginés pour la catalyse, c'est-à-dire essentiellement la silice et les aluminosilicates, ont commencé à susciter l'attention de certains électrochimistes.

Rappelons que, spécifiquement, au sens de la présente, les matériaux dits mésoporeux, sont des solides qui présentent au sein de leur structure des pores possédant une taille comprise typiquement entre 1 et 100 nm, de préférence entre 2 et 50 nm (cette derniére plage correspondant à la définition IUPAC de la mésoporosité), qui est intermédiaire entre celle des micropores (composés de type zéolithe) et celle des macropores.

Typiquement, les matériaux mésoporeux sont des oxydes métalliques amorphes ou cristallins dans lesquels les pores sont généralement répartis de manière aléatoire avec une distribution très large de la taille des pores.

Les matériaux mésoporeux structurés, dénommés matériaux « mésostructurés », correspondent quant à eux à des réseaux poreux structurés qui présentent un agencement spatial organisé de mésopores. Cette périodicité spatiale des pores est caractérisée par l'apparition d'au moins un pic de diffraction aux bas angles dans un diagramme de diffraction des rayons X ; ce pic est associé à une distance de répétition qui est généralement comprise entre 2 et 50 nm. La mésostructure est vérifiée par microscopie électronique en transmission. La mésoporosité peut être libre ou fonctionnalisée par des fonctions chimiques ou des nanoparticules.

Dans ce cadre, le procédé sol-gel offre des stratégies innovantes dans la construction de ces édifices mésoporeux organisés, notamment par polymérisation inorganique au sein de systèmes moléculaires organisés (SMO) de tensio-actifs ou au sein de systèmes polymériques organisés (SPO) de copolymères à blocs.

En présence d'agents texturants de type SMO, la chimie douce sol-gel permet de synthétiser, à partir de précurseurs inorganiques et organométalliques, de tels réseaux mésostructurés de nature organominérale appelés matériaux hybrides organiques-inorganiques. Les propriétés de ces matériaux hybrides organiques-inorganiques mésoporeux dépendent non seulement de la nature chimique des composants organiques et inorganiques, mais également de la synergie qui peut apparaître entre ces deux chimies.

C'est la raison pour laquelle ces matériaux sont souvent dénommés matériaux « multifonctionnels ».

Le degré d'organisation est gouverné par la nature de ces deux entités organiques et inorganiques mais aussi par l'agencement multi-échelle de cet arrangement. Ainsi, l'intégration dans une structure mésoporeuse ordonnée, dans les « murs » comme dans les pores, de fonctionnalités chimiques capables d'induire des propriétés spécifiques présente un grand intérêt dans diverses applications, par exemple en catalyse, filtration, électrochimie.

De plus, la texturation des réseaux mésostructurés en nanofibres conduit à la formation de tissus, de membranes, de films.

En outre, l'utilisation de telles fibres hybrides mésoporeuses dans les piles à combustible offre de nombreuses possibilités favorisant les propriétés de transport et la continuité des chemins de conduction.

Dans les piles à combustible, les membranes servent de support aux matériaux catalytiques responsables de l'oxydation de l'hydrogène à l'anode et de la réduction de l'oxygène à la cathode et sont donc généralement constituées par trois constituants principaux, à savoir, un conducteur électrique tel que le carbone, un électrolyte, et un matériau catalytique tel que des particules de platine qui catalysent les réactions oxydo-réductrices. Ces réactions ont lieu principalement à l'interface de ces trois constituants (le point triple) qui doit donc être accessible par les gaz réactants. Un des principaux objectifs qui doit être rempli dans une pile à combustible est de diminuer et de rationaliser la quantité de catalyseur, tel que le platine.

Ces matériaux de membranes sont mis en forme aujourd'hui par des procédés par voie liquide tels que l'enduction ou bien par des procédés par voie fondue tels que l'extrusion.

Bien que l'éventuelle utilisation dans les dispositifs électrochimiques de matériaux inorganiques mésoporeux, tels que les silices mésoporeuses mésostructurées construites par SMO et SPO ait déjà été évoquée, il s'avère que de tels matériaux ne peuvent donner lieu à une application directe en pile à combustible car il est impossible de les mettre sous la forme de fibres constituant une membrane en mettant en œuvre les procédés mentionnés plus haut.

Il existe donc un besoin pour un matériau mésoporeux qui puisse être mis sous la forme de fibres constituant une membrane, en particulier une membrane homogène et flexible.

On connaît par ailleurs le procédé d'extrusion électro-assistée (« electrospinning » en anglais).

L'extrusion électro-assistée est un procédé de mise en forme qui conduit à la réalisation de fibres en appliquant une différence de potentiel importante entre l'extrémité d'une aiguille métallique reliée à une seringue contenant la solution chimique, et un support d'électrode conducteur positionné à une distance donnée de ladite seringue pour récolter les fibres ainsi formées.

Les travaux antérieurs sur le procédé d'extrusion électro-assistée portent essentiellement sur la fabrication de nanofibres polymères. Ce choix est guidé par la méthode en elle-même qui nécessite d'utiliser des solutions à caractère visco-élastique. Les travaux récents montrent que les solutions « sol-gel » de part leurs caractéristiques physico-chimiques sont bien adaptées à ce type de dépôt et constituent une voie de synthèse intéressante pour l'élaboration en particulier de nanofibres composites ou céramiques.

L'utilisation de sols inorganiques a permis de synthétiser des nanofibres de silice [1], des nanofibres composites oxyde/oxyde (TiO₂/SiO₂) [2], des nanofibres céramiques monométallique (Al₂O₃) [2] ou hétérométalliques (PbZrₓTi₁₋ₓ0₃ (PZT)) [3].

La morphologie des nanofibres dépend de nombreux paramètres liés à l'appareillage tels que la tension appliquée, la distance entre l'aiguille et l'électrode, la taille de l'aiguille, etc. mais aussi des caractéristiques physico-chimiques de la solution telles que la rhéologie, la tension de surface, la concentration, etc.

Dans ces synthèses, les travaux de la littérature montrent que la transition sol-gel peut se faire dans la solution initiale ou au cours de la préparation des fibres [5]. D'après ces données de la littérature, le moment où cette étape a lieu ne semble pas influencer la morphologie des fibres.

L'incorporation d'un polymère organique, tel que le PVP, dans la solution de précurseurs sol-gel tels que des alcoxydes de métaux de transition, peut servir à augmenter et contrôler la viscosité de la solution à « électrospinner » et donc à lui conférer ses caractéristiques visco-élastiques. Dans ces conditions, un réseau inorganique continu en trois dimensions se forme à l'intérieur de la matrice polymère. Des fibres constituées d'un réseau composite organique/inorganique sont alors directement obtenues. L'élimination de la phase organique par un traitement thermique permet la synthèse de fibres céramiques.

Cette méthode a été utilisée pour la synthèse de différents oxydes tels que: TiO₂, SiO₂, SnO₂, ITO, GeO₂, NiFe₂O₄, LiCoO₂ ou BaTiO₃. Outre le PVP, différents polymères hôtes sont cités dans la littérature tels que le poly(vinyl) alcool (PVA), le poly(vinylacétate) et le PEO [6]. Les combinaisons entre le polymère « hôte » et le réseau inorganique « invité » sont donc multiples. De ce fait, une grande variété de nanofibres d'oxydes est mentionnée: Al₂O₃, CuO, NiO, TiO₂-SiO₂, V₂O₅, ZnO, Co₃O₄, Nb₂O₅, MoO₃ et MgTiO₃ [6].

Par ailleurs, des nanofibres céramiques autres que des oxydes sont aussi préparées par ce procédé. Ainsi, le document [2] décrit-il la synthèse des fibres de SiC par électrospinning à partir d'une solution de résine Novolaque et de tétraéthylorthosilicate, suivie d'une pyrolyse à haute température.

Zhao et al, 2007 (Materials Letters, vol. 62, pages 143-146) décrit la fabrication de nanofibres de silice mésoporeuses par co-extrusion électro-assistée d'un sol précurseur et de polymère. Dans ce document, l'hydrolyse de la phase minérale met en œuvre une catalyse acide moyennant quoi les nanofibres obtenues comprennent un cœur minéral et une gaine comprenant la phase organique.

L'extrusion électro-assistée autorise également la synthèse de nanotubes ou de nanofibres creuses [13, 14]. Dans ce cas, un dispositif expérimental différent est utilisé [15, 16]. Deux solutions visqueuses non miscibles entre elles sont placées dans les capillaires coaxiaux. Par exemple, il peut s'agir d'une huile minérale et d'une solution de PVP/Ti(O/Pr)₄. Par cette technique, il est possible d'obtenir des nanofibres constituées au cœur d'huile minérale et en surface d'un composite TiO₂/PVP. Une dissolution sélective de l'huile minérale permet d'obtenir des fibres constituées de murs composites TiO₂/PVP. Des fibres céramiques polycristallines peuvent être aussi synthétisées en éliminant cette fois-ci simultanément le PVP et l'huile minérale par un traitement thermique judicieux.

L'introduction de nanoparticules à l'intérieur même des fibres précédentes est également décrite dans la littérature. Dans ce cas, il est nécessaire de disperser au préalable les nanoparticules dans l'huile minérale.

La surface des nanofibres peut, en outre, être augmentée en créant de la porosité. L'augmentation de la surface spécifique des nanofibres présente un intérêt pour de nombreuses applications comme la catalyse, les piles à combustible, les batteries et les cellules solaires. Pour créer de la porosité dans ces nanofibres, deux approches sont décrites dans la littérature.

La première consiste à induire de la porosité lors de la synthèse sol-gel des nanofibres d'oxyde métallique et à conférer une structure particulière à cette porosité grâce à l'utilisation d'agents texturants tels que des tensio-actifs. Des nanofibres mésostructurées sont synthétisées et la porosité est libérée lors du traitement thermique des fibres en éliminant l'agent structurant. Diverses compositions ont ainsi été étudiées avec SiO₂, TiO₂, Ta₂O₅, TaNbO₅ ainsi que Nb₂O₅ et V₂O₅ [4] .

La seconde approche consiste à utiliser un dispositif expérimental qui présente deux capillaires coaxiaux pour l'écoulement de la solution, du même type que celui utilisé pour la synthèse de fibres creuses. Dans le document [16b], ce dispositif est utilisé pour préparer des nanofibres de céramiques poreuses. Deux polymères non miscibles entre eux sont mis en œuvre, dont un est mélangé avec les précurseurs organométalliques de la phase inorganique. Les polymères sont dilués dans deux solvants qui sont miscibles entre eux et les solutions sont placées dans chacun des réacteurs. Lors du processus, les deux milieux se mélangent entraînant dans le « jet » une séparation de phase entre les deux polymères organiques. Après calcination, les polymères organiques se décomposent laissant place à de la porosité. Les fibres résultantes deviennent donc très poreuses.

Aussi bien dans le cas de la première approche, que dans le cas de la seconde approche, la porosité est générée lors d'un traitement thermique, notamment un traitement de calcination et aucune fonctionnalité chimique ne subsiste.

Le développement de matériaux membranaires par extrusion électro-assistée pour une application dans les piles à combustibles commence tout juste à susciter un intérêt [21], [22]. Le premier document porte sur l'extrusion assistée de Nafion^{®} ou de polymères électrolytes comme les polysulfones.

Plus particulièrement, le document [21] décrit la préparation de membranes en quatre étapes comprenant la formation de nanofibres conductrices protoniques, la création d'un réseau de fibres interconnectées, et le remplissage de la porosité entre les fibres par un polymère inerte.

Il ressort de ce qui précède qu'il existe un besoin pour des nanofibres en un matériau hybride organique-inorganique comprenant une première phase minérale comprenant un réseau mésoporeux structuré à porosité ouverte, et une deuxième phase organique comprenant un polymère organique.

Il existe notamment un besoin pour des nanofibres en un matériau hybride organique-inorganique mésostructuré qui comportent des fonctions organiques liées de préférence de façon covalente au réseau mésoporeux par exemple en oxyde de métal ou de métalloïde.

Le but de la présente invention est de répondre entre autres à ces besoins, et de fournir de telles nanofibres en un matériau hybride organique-inorganique comprenant un réseau mésoporeux inorganique structuré.

Le but de la présente invention est, en outre, de fournir un procédé de préparation de ces nanofibres qui soit simple, fiable, et qui permette notamment d'obtenir des nanofibres hybrides organiques-inorganiques comprenant des fonctions chimiques organiques liées au réseau mésoporeux inorganique structuré.

Le but de la présente invention est encore de fournir de telles nanofibres et un procédé de préparation de ces nanofibres qui ne présentent pas les inconvénients, défauts, limitations et désavantages des nanofibres hybrides organique-inorganiques et des procédés de préparation de nanofibres hybrides organique-inorganiques de l'art antérieur et qui surmontent les problèmes des nanofibres hybrides et des procédés de préparation de nanofibres hybrides de l'art antérieur.

### EXPOSÉ DE L'INVENTION

Ce but et d'autres encore sont atteints, conformément à l'invention par des nanofibres hybrides organiques-inorganiques telles que définies dans les revendications 1 à 9, comprenant deux phases :
- une première phase minérale comprenant un réseau mésoporeux structuré à porosité ouverte ; et
- une deuxième phase organique comprenant un polymère organique, ladite phase organique n'étant pas présente à l'intérieur des pores du réseau mésoporeux structuré.

La deuxième phase organique peut être essentiellement constituée ou constituée par ledit polymère organique et peut être dénommée phase organique polymérique.

Des nanofibres hybrides organiques-inorganiques présentant la structure spécifique selon l'invention, avec une phase minérale, inorganique, mésoporeuse et une phase organique n'ont jamais été décrites dans l'art antérieur où il n'est pas fait état de nanofibres dans lesquelles on a réalisé la croissance de réseaux minéraux mésoporeux, en particulier conducteurs et hydrophiles, dans une matrice comprenant un polymère organique mécaniquement structurant.

Avantageusement, les nanofibres selon l'invention comprennent un réseau mésoporeux structuré à porosité ouverte orienté dans une direction déterminée, privilégiée, particulière, qui est de préférence la direction de la longueur des nanofibres, ce qui favorise et garantit la continuité des chemins de conduction à condition cependant d'avoir une porosité ouverte.

On entend par porosité ouverte, une porosité formée de pores débouchants et restant de ce fait accessibles aux espèces conductrices.

Cette propriété des nanofibres selon l'invention est particulièrement avantageuse dans les membranes conductrices protoniques.

Selon une première forme de réalisation ne faisant pas partie de l'invention, la phase minérale et la phase organique sont continues et entremêlées.

En d'autres termes, la phase inorganique, minérale et la phase organique, selon cette première forme de réalisation, forment des réseaux co-continus avec une interface contrôlée entre les deux réseaux.

En particulier, les nanofibres peuvent comprendre un cœur constitué par la phase minérale entouré par une gaine constituée par la phase organique.

Selon une deuxième forme de réalisation objet de l'invention, la phase minérale est discontinue, et dispersée dans la phase organique qui est continue.

La phase minérale peut présenter des fonctions chimiques organiques non hydrolysables.

Ces fonctions chimiques organiques sont généralement liées de façon covalente au réseau mésoporeux, par exemple au réseau d'oxyde.

Ces fonctions chimiques organiques sont des fonctions conductrices et hydrophiles.

Ces fonctions chimiques organiques peuvent être situées, localisées en un emplacement quelconque dans le réseau mésoporeux. Ainsi les fonctions chimiques organiques peuvent-elles se trouver à la surface des pores en étant liées de façon covalente aux parois du réseau mésoporeux.

La présence de ces fonctions organiques dans la phase minérale, le réseau mésoporeux, est très intéressante pour de nombreuses applications, notamment dans les domaines de la catalyse, de la détection, des dispositifs de production d'énergie.

Des nanofibres hybrides présentant des fonctions chimiques organiques liées notamment par covalence à un réseau mésoporeux par exemple en oxyde ne sont pas connues dans l'art antérieur, représenté notamment par les documents cités plus haut.

De même, la phase organique peut présenter des fonctions chimiques organiques non hydrolysables.

Ces fonctions chimiques organiques de la phase organique sont des fonctions conductrices et/ou hydrophiles.

Le matériau peut éventuellement comprendre, en outre, une troisième phase à l'intérieur des pores constituée par au moins un agent structurant, texturant tel qu'un agent tensio-actif.

Cet agent structurant, texturant peut présenter éventuellement des fonctions chimiques organiques, de préférence non hydrolysables, choisies de préférence parmi les fonctions conductrices et/ou hydrophiles, mais seulement dans le cas où au moins une des autres phases présente des fonctions conductrices et/ou hydrophiles.

Par fonctions conductrices, on entend généralement que ces fonctions présentent une conductivité ionique, de préférence protonique.

Dans le cas où le matériau présente trois phases (organique, minérale, tensio-active), la phase minérale présente des fonctions conductrices et au moins une des phases choisie parmi la phase tensioactive et la phase organique peut présenter des fonctions conductrices, il est aussi possible que les trois phases présentent des fonctions conductrices.

En général, les nanofibres selon l'invention présentent une porosité ouverte servant notamment de réseau de conduction protonique continu. De préférence, le squelette mésoporeux est hygroscopique et possède une fonctionnalité conductrice dans ses pores (il s'agit par exemple d'un oxyde métallique fonctionnalisé) qui assure ainsi le transport des protons et l'hydratation. La phase polymère organique sert de support et apporte principalement la structuration du milieu de conduction.

Il se produit une véritable synergie entre les deux phases qui communique aux nanofibres selon l'invention une combinaison unique de propriétés chimiques, physiques, électriques, mécaniques jamais atteintes dans l'art antérieur.

On peut dire que les nanofibres selon l'invention présentent une hiérarchisation de leurs propriétés aussi bien chimiques, que mécaniques à différents niveaux d'organisation qui ouvre des perspectives intéressantes pour des applications électrochimiques faisant appel à des systèmes complexes et à des propriétés diverses.

En d'autres termes, les nanofibres selon l'invention présentent une hiérarchisation de leurs propriétés et sont constituées par un matériau « multifonctionnel », à propriétés multiples, dont les différentes fonctions, propriétés sont réparties à chaque échelle dimensionnelle du matériau, à savoir l'échelle du millimètre, l'échelle du micromètre, l'échelle du nanomètre et l'échelle de l'Angstrom.

Ainsi, les nanofibres selon l'invention peuvent présenter une fonctionnalité, des propriétés chimiques, à la surface de pores du réseau mésoporeux inorganique, c'est-à-dire à une échelle nanométrique, tandis que les propriétés mécaniques peuvent être plutôt communiquées aux fibres par le polymère, à une échelle millimétrique.

Avantageusement, les fonctions conductrices peuvent être choisies parmi les groupes échangeurs de cations et/ou les groupes échangeurs d'anions.

Les groupes échangeurs de cations peuvent être choisis, par exemple, parmi les groupes suivants : -SO₃M'; -PO₃M'₂ ; -COOM' et -B(OM')₂, où M' représente l'hydrogène, un cation métallique monovalent choisi par exemple parmi Li⁺, Na⁺, K⁺, ou -N⁺R⁴₃ où chaque R⁴ représente indépendamment un hydrogène, un radical alkyle par exemple de 1 à 10 C ou un radical aryle par exemple de 6 à 10 C.

Les groupes échangeurs d'anions peuvent être choisis, par exemple, parmi les groupes suivants : pyridyle ; imidazolyle ; pyrazolyle ; triazolyle ; les radicaux de formule -N⁺R⁶₃X'⁻, où X' représente un anion comme par exemple F, Cl, Br, I, NO₃, SO₄H, ou OR⁷, R⁷ étant un radical alkyle par exemple de 1 à 10 C ou un radical aryle par exemple de 6 à 10 C, et où chaque R⁶ représente indépendamment un hydrogène, un radical alkyle par exemple de 1 à 10 C, ou un radical aryle par exemple de 6 à 10 C ; et les radicaux basiques aromatiques ou non aromatiques contenant au moins un radical choisi parmi les radicaux imidazole, vinylimidazole, pyrazole, oxazole, carbazole, indole, isoindole, dihydrooxazole, isooxazole, thiazole, benzothiazole, isothiazole, benzoimidazole, indazole, 4,5-dihydropyrazole, 1,2,3-oxadiazole, furazane, 1,2,3-thiadiazole, 1,2,4-thiadiazole, 1,2,3-benzotriazole, 1,2,4-triazole, tetrazole, pyrrole, aniline, pyrrolidine, et pyrazole.

Avantageusement, les nanofibres selon l'invention peuvent comprendre, en outre, de préférence sur au moins une de leurs surfaces, de préférence encore sur au moins une de leurs surfaces extérieures, des nanoparticules catalytiques.

De préférence, ces nanoparticules catalytiques peuvent être choisies parmi les nanoparticules métalliques et/ou d'oxyde(s) métallique(s).

Ces nanoparticules peuvent être constituées totalement ou en partie de platine, de ruthénium, rhodium, d'or, de nickel, de cobalt, ou d'un mélange et/ou d'un alliage de ceux-ci.

La phase minérale, inorganique, est généralement constituée par au moins un oxyde choisi parmi les oxydes de métaux, les oxydes de métalloïdes et les oxydes mixtes de ceux-ci.

Ledit oxyde est généralement choisi parmi les oxydes de silicium, titane, zirconium, hafnium, aluminium, tantale, étain, zinc, magnésium, terres rares ou lanthanides tels qu'europium, cérium, yttrium, lanthane et gadolinium, et les oxydes mixtes de ceux-ci.

La phase minérale du matériau selon l'invention est une phase mésostructurée, cela signifie, de manière plus précise, que le réseau mésoporeux présente une structure organisée avec un motif de répétition.

Par exemple, le réseau mésoporeux peut présenter une structure cubique, hexagonale, lamellaire, vermiculaire, vésiculaire ou bicontinue.

La taille des pores du réseau mésoporeux est généralement de 1 à 100 nm, de préférence de 2 à 50 nm.

Le polymère organique de la phase organique doit généralement répondre à un certain nombre de conditions.

Avant tout, ledit polymère doit généralement être thermostable ; par thermostable, on entend qu'il garde ses propriétés sous l'action de la chaleur.

Le polymère doit généralement, en outre, ne pas être sensible à l'hydrolyse et à l'oxydation à des températures en particulier élevées, notamment aux températures de fonctionnement des piles à combustible et ce pendant plusieurs milliers d'heures.

En outre, généralement le polymère choisi doit être :
- soluble en milieu hydro-alcoolique, alcoolique ou dans les autres solvants miscibles à l'eau puisque l'organisation du surfactant éventuel en milieu liquide, agent texturant de la phase mésoporeuse, s'effectue dans des milieux fortement polaires tels que l'eau, les alcools, les éthers, les cétones, la diméthylformamide, le diméthylsulfoxyde, la N-méthylpyrrolidone ;
- plastique, pour apporter suffisamment de flexibilité à la phase inorganique mésoporeuse et former un film autosupporté, c'est-à-dire que le polymère peut être qualifié de polymère (mécaniquement) structurant ;
- ce polymère ne doit pas essentiellement jouer le rôle d'agent texturant capable de générer une mésoporosité.

Le polymère organique sera généralement choisi parmi les polyéthercétones (PEK, PEEK, PEEKK) ; les polysulfones (PSU), par exemple le Udel^{®} ; les polyéthersulfones, par exemple le VITREX^{®} ; les polyphényléthersulfones (PPSU), par exemple le Radel^{®} ; les copolymères styrène/éthylène (SES), styrène/butadiène (SBS), styrène/isoprène (SIS), par exemple le KRATON^{®} ; les polyphénylènes, tels que les poly(sulfure de phénylènes) et les poly(oxyde de phénylènes) ; les polyimidazoles, tels que les polybenzimidazoles (PBI) ; les polyimides (PI) ; les polyamideimides (PAI) ; les polyanilines ; les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylène) ; les poly(acide (méth)acryliques) ; les polyacrylamides ; les polyvinyles, tels que les poly(esters de vinyle), par exemple les polyvinylacétates, les polyvinylformates, les polyvinylpropionates, les polyvinyllaurates, les polyvinylpalmitates, les polyvinylstéarates, les polyvinyltriméthylacétates, les polyvinylchloroacétates, les polyvinyltrichloroacétates, les polyvinyltrifluoroacétates, les polyvinylbenzoates, les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE), par exemple le TEFLON^{®} ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

Lorsque le matériau comprend une troisième phase, à l'intérieur des pores, cette troisième phase peut être constituée par un agent texturant, structurant. Cet agent texturant, structurant peut être choisi parmi les agents tensio-actifs, surfactants, ces derniers peuvent être choisis parmi : les sels d'alkyltriméthylammonium, d'alkylphosphates et d'alkylsulfonates ; les acides comme l'acide dibenzoyltartrique, l'acide maléique ou les acides gras à chaîne longue ; les bases comme l'urée ou les amines à chaîne longue ; les phospholipides ; les copolymères doublement hydrophiles dont l'amphiphilie est générée « in situ » par interaction avec un substrat ; les copolymères multibloc amphiphiles comportant au moins un bloc hydrophobe associé à au moins un bloc hydrophile. Parmi ces polymères, on peut citer, par exemple, les Pluronic^{®} à base de PEO(poly(oxyde d'éthylène)) et PPO(poly(oxyde de propylène)) de type (EO)ₙ-(PO)ₘ-(EO)ₙ, les copolymères de type ((EO)ₙ-(PO) ₘ)ₓ-NCH₂CH₂N-((EO)ₙ-(PO)ₘ)ₓ (Tetronic^{®}), la famille Cₙ(EO)ₘ(OH) (Cₙ=chaîne alkyle et/ou aryle, EO=chaîne oxyde d'éthylène), par exemple Brij^{®}, Triton^{®} ou Igepal^{®}, et la famille (EO)ₘ-sorbitan-Cₙ(Tween^{®}).

Il est important de noter que le polymère organique de la phase organique ne doit en aucun cas être confondu avec un polymère tensio-actif éventuel. Bien que dénommés alors tous deux « polymères », ces composés sont différents aussi bien au niveau de leur structure que de leurs effets. Le polymère de la phase organique est un polymère qui joue un rôle de structuration mécanique de l'ensemble du matériau hybride, tandis que l'éventuel polymère tensio-actif est qualifié de « texturant », « structurant » en liaison avec la structuration, texturation, du réseau mésoporeux.

L'invention concerne en outre une membrane comprenant les nanofibres telles que décrites ci-dessus, éventuellement déposées sur un support.

Par membrane, on entend généralement que le matériau se présente sous la forme d'un film ou feuille d'une épaisseur par exemple de 50 nm à quelques millimètres, de préférence de 10 à 500 nm et que dans cette membrane, les fibres sont généralement liées et/ou collées et/ou soudées.

L'invention a trait aussi à une électrode comprenant les nanofibres, telles que décrites ci-dessus.

Les excellentes propriétés des nanofibres selon l'invention, sous forme d'une membrane et/ou d'électrode les rendent particulièrement adéquates à une utilisation dans un dispositif électrochimique, par exemple une pile à combustible.

L'invention concerne donc également une pile à combustible comprenant au moins une membrane et/ou une électrode telle que décrite plus haut.

L'invention a également trait à un procédé de préparation de nanofibres hybrides organiques-inorganiques, telles que décrites plus haut, dans lequel on réalise les étapes successives suivantes :
a) on prépare au moins une solution, dans un solvant, d'un précurseur minéral A et/ou d'un précurseur organométallique C destiné à constituer la phase minérale ;
b) on ajoute à la solution préparée dans l'étape a), au moins un agent D structurant, texturant de la phase minérale mésoporeuse, moyennant quoi on obtient une solution S1 ; et on hydrolyse en milieu catalytique basique et on laisse mûrir ladite solution S1;
c) on prépare une solution S2 d'un polymère organique E dans un solvant ;
d) on réalise l'extrusion électro-assistée simultanée, séparée de la solution S1 et de la solution S2 avec un dispositif d'extrusion électro-assistée bicapillaire ; ou bien l'extrusion électro-assistée d'un mélange, éventuellement mûri, de la solution S1 et de la solution S2 avec un dispositif d'extrusion monocapillaire ; lesdits dispositifs comprenant au moins une seringue contenant la ou les solution(s) reliée à une aiguille à laquelle est appliquée une tension, et un collecteur ou support, moyennant quoi on obtient un dépôt de nanofibres hybrides organiques-inorganiques sur le collecteur ou support ;
f) e1) on effectue un traitement thermique à une température entre 50°C et 300°C pour réaliser une consolidation des nanofibres déposées ; éventuellement à l'issue de l'étape e1), on élimine totalement ou partiellement l'agent D structurant, texturant ;
g) éventuellement à l'issue de l'étape e1) ou de l'étape f), on sépare ou on élimine éventuellement le support.

Il est évident que les étapes f) et g) éventuelles ne sont éventuellement pas réalisées si l'agent D ou le support a déjà été précédemment éliminé.

Le polymère E et l'agent structurant, texturant D peuvent être choisis parmi les polymères et agents texturants, structurants mentionnés plus haut dans le cadre de la description des nanofibres selon l'invention.

Il est à noter que l'agent structurant D ou une solution de celui-ci dans un solvant (de préférence analogue au solvant de la solution S1 et/ou de la solution S2) peut éventuellement être ajouté(e) à la solution S2 au lieu d'être ajouté(e) à la solution préparée dans l'étape a), ou bien l'agent structurant D ou une solution de celui-ci dans un solvant (de préférence analogue au solvant de l'étape a) et/ou de la solution S2) peut être ajouté(e) à la fois à la solution préparée dans l'étape a) (on réalise donc alors l'étape b)) et à la solution S2.

Avantageusement, le précurseur A peut être choisi parmi les sels de métaux, les sels de métalloïdes, les alcoxydes de métaux, et les alcoxydes de métalloïdes. Les métaux et métalloïdes peuvent être choisis parmi les métaux et métalloïdes mentionnés plus haut dans le cadre de la description des nanofibres selon l'invention.

Avantageusement, le polymère et/ou l'agent structurant, texturant D tel qu'un agent tensio-actif D, sont porteurs de fonctions chimiques organiques conductrices et/ou hydrophiles et/ou de fonctions précurseurs de ces fonctions chimiques organiques telles que des fonctions conductrices et/ou hydrophiles.

Avantageusement, on peut ajouter, en outre, un agent chélatant B, tel que l'acétylacétone ou l'acide acétique à la solution S1.

Avantageusement, le composé précurseur organo-minéral C est un composé porteur d'une part, de fonctions chimiques organiques conductrices et hydrophiles ou de fonctions précurseurs de ces fonctions chimiques organiques, et, d'autre part, de fonctions susceptibles de se lier à la surface des pores du réseau mésoporeux.

Avantageusement, la solution S1, la solution S2, ou le mélange des solutions S1 et S2, ont une viscosité de 40 à 7000 cps à 20°C.

Avantageusement, la concentration de la solution S1 en précurseur minéral A et/ou en précurseur organo-minéral C et la concentration de la solution S2 en polymère E, exprimées en extrait sec peuvent être de 15 à 60% en masse , de préférence de 15 à 30% en masse.

Avantageusement, les solvants des solutions S1 et S2 sont des solvants peu volatils dont la tension de vapeur est inférieure à celle de l'éthanol.

Avantageusement, on peut laisser mûrir la solution S1 à une température de 0°C à 300°C, de préférence de 20°C à 200°C ; à une pression de 100 Pa à 5.10⁶ Pa, de préférence de 1 000 Pa à 2.10⁵ Pa ; pendant une durée de quelques minutes à quelques jours, de préférence d'une heure à une semaine, de préférence encore de 12 à 18 heures.

Avantageusement, préalablement à l'extrusion électro-assistée, la solution S1 et/ou la solution S2 peuvent être préchauffées à une température de 40°C à 80°C, de préférence de 60°C à 70°C.

Avantageusement, l'extrusion électro-assistée peut être contrôlée en agissant sur un ou plusieurs et de préférence tous parmi les paramètres suivants :
- la température de dépôt ;
- l'humidité relative de l'atmosphère dans laquelle est réalisé le dépôt;
- la tension appliquée à l'aiguille ;
- la vitesse d'écoulement des solutions ou du mélange dans la seringue ;
- la distance entre l'aiguille et le collecteur ou support ;
- l'atmosphère dans laquelle est réalisé le dépôt.

Avantageusement, un ou plusieurs et de préférence tous parmi ces paramètres peut (peuvent) être choisi(s) conformément à ce qui suit :
- Température de dépôt : 20°C à 200°C, de préférence 25°C à 100°C, et de préférence encore 30°C à 70°C ;
- Humidité relative de l'atmosphère dans laquelle est réalisé le dépôt : 0 à 90%, de préférence 5 à 90%, et de préférence encore 5 à 60% ;
- Tension appliquée à l'aiguille : 2 à 25 kV, de préférence 5 à 20 kV, et de préférence encore 8 à 15 kV ;
- Vitesse d'écoulement des solutions ou du mélange dans la seringue : 0,1 à 20 mL/h, de préférence 0,1 à 10 mL/h ;
- Distance entre l'aiguille et le collecteur ou support : 2 à 25 cm, de préférence 10 à 18 cm;
- Atmosphère dans laquelle est réalisé le dépôt : Air, Azote ou Argon.

Avantageusement, la solution S1 et/ou la solution S2 comprend(comprennent) des nanoparticules catalytiques, de préférence des nanoparticules métalliques et/ou d'oxydes métalliques.

Avantageusement, on peut pulvériser une suspension de nanoparticules catalytiques, de préférence des nanoparticules de métaux et/ou d'oxydes de métaux dans le(s) jet(s) sortant de l'aiguille du dispositif d'extrusion électro-assistée.

Avantageusement, le procédé comprend, en outre, une étape finale de traitement pour libérer ou générer des fonctions chimiques organiques telles que des fonctions conductrices et/ou hydrophiles sur la surface des pores des nanofibres.

Comme on l'a précisé plus haut, le procédé selon l'invention peut être décrit comme un procédé de préparation d'une membrane à porosité contrôlable constituée de nanofibres qui contiennent au moins une structure inorganique mésostructurée avec des fonctions chimiques organiques liées de façon covalente au réseau inorganique et apportant des propriétés spécifiques conductrices et protoniques ; ces fibres étant intégrées dans un polymère organique qui confère à la membrane d'autres propriétés, telles que des propriétés mécaniques, hydrophobes/hydrophiles.

La préparation d'une telle membrane multifonctionnelle (c'est-à-dire présentant plusieurs types de propriétés) à propriétés hiérarchisées sous-entend un certain nombre d'obstacles à surmonter pour l'obtention de deux réseaux co-continus avec une interface contrôlée entre les deux réseaux.

Selon l'invention, ces obstacles sont surmontés par :
- le contrôle de la rhéologie des solutions qui sont formulées pour être « électrospinnées », c'est-à-dire qu'elles présentent généralement des propriétés visco-élastiques. La viscosité influence la morphologie des fibres obtenues et généralement les viscosités utilisées dans le procédé selon l'invention sont très élevées, nettement supérieures à la viscosité des solutions des procédés par voie humide tels que le procédé de « dip-coating » . Ces viscosités sont généralement supérieures ou égales à 40 cP, de préférence de 40 à 7000 cP, et de préférence encore, de 100 à 500 cP.

L'état de polycondensation de la solution sol-gel et le choix du solvant sont alors très importants et c'est la raison pour laquelle on choisira de préférence, selon l'invention, des solvants peu volatils, c'est-à-dire des solvants dont la tension de vapeur est inférieure ou égale à celle de l'éthanol, pour les solutions S1 et S2 ;
- le contrôle de la mésostructuration du réseau, par exemple du réseau d'oxyde en présence de l'agent structurant, texturant, avec des conditions de croissance adéquates par voie sol-gel de la phase inorganique mésoporeuse fonctionnalisée lors du procédé d'extrusion électro-assistée ;
- le contrôle de l'interface entre les deux phases, inorganique et polymère organique avec une solution inorganique qui doit avoir des caractéristiques visco-élastiques comparables à celles observées dans les polymères. Ces exigences peuvent être atteintes par un contrôle de la cinétique des réactions d'hydrolyse et de condensation, en ajustant le pH et/ou en optimisant le vieillissement du sol par exemple en modulant le chauffage de celui-ci.
- le contrôle du taux d'humidité ambiant, du flux d'air qui est de préférence un flux laminaire, et de la température du système avec une gestion indépendante des températures des réacteurs et de l'électrode au niveau du dispositif d'extrusion électro-assistée pour gérer la porosité interfibres pour former en une seule étape des membranes électrolytes denses pour piles à combustible ou des structures membranaires poreuses pour support catalytiques PEMFC.

Selon l'invention, on maîtrise simultanément un ou plusieurs, et de préférence tous les paramètres relatifs aux matériaux et au procédé liés à la préparation de telles nanofibres. Le procédé selon l'invention dans ses formes de réalisation les plus avantageuses réalise un contrôle réactionnel concomitant des précurseurs inorganiques, organométalliques, en présence des catalyseurs et de polymères organiques.

En d'autres termes, selon l'invention, on réalise ce que l'on pourrait appeler un contrôle synchrone multi-réactif associé à la régulation des paramètres du procédé.

L'invention sera mieux comprise à la lecture de la description qui va suivre, donnée à titre illustratif et non limitatif, en référence aux dessins joints dans lesquels :

### BRÈVE DESCRIPTION DES DESSINS

- La Figure 1A est une vue schématique d'un dispositif d'extrusion électro-assistée monocapillaire, comprenant un seul réacteur contenant un mélange d'une solution A et d'une solution B, qui est extrudé ;
- La Figure 1B est une vue schématique en coupe d'une fibre obtenue avec le dispositif de la Figure 1A ;
- La Figure 2A est une vue schématique d'un dispositif d'extrusion électro-assistée bicapillaire, comprenant un premier réacteur contenant une solution A imbriquée dans un deuxième réacteur contenant une solution B, les solutions A et B étant extrudées simultanément, séparément et indépendamment par des orifices concentriques pour former une seule fibre hybride selon l'invention (Figure 2B) ;
- La Figure 2B est une vue schématique en coupe d'une fibre hybride obtenue avec le dispositif de la Figure 2A, une telle fibre ne faisant pas partie de l'invention ;
- La Figure 3A est une vue schématique d'un dispositif d'extrusion électro-assistée monocapillaire, comprenant un seul réacteur contenant un mélange d'une solution A et d'une solution B, qui est extrudé ; le dispositif d'extrusion électro-assistée monocapillaire étant couplé à un dispositif de pulvérisation d'une solution C ;
- La Figure 3B est une vue schématique en coupe d'une fibre obtenue avec le dispositif de la Figure 3A ;
- La Figure 4A est une vue schématique d'un dispositif d'extrusion électro-assistée bicapillaire, comprenant un premier réacteur contenant une solution A imbriquée dans un deuxième réacteur contenant une solution B, les solutions A et B étant extrudées simultanément et indépendamment par des orifices concentriques pour former une seule fibre hybride ; le dispositif d'extrusion électro-assistée bicapillaire étant couplé à un dispositif de pulvérisation d'une solution C ;
- La Figure 4B est une vue schématique en coupe d'une fibre obtenue avec le dispositif de la Figure 4A, une telle fibre ne faisant pas partie de l'invention;
- Les Figures 5A à 5D sont des images obtenues par microscopie électronique à balayage des fibres hybrides obtenues dans l'exemple 1 ne faisant pas partie de l'invention, ces fibres ayant été soumises à l'un des traitements thermiques de vieillissement suivants :
   - Chauffage à 70°C pendant 12 heures (Figure 5A); ou bien
   - Chauffage à 130°C pendant 4 heures (Figure 5B) ; ou bien
   - Chauffage à 70°C et extraction du tensio-actif par lavage dans l'éthanol (Figures 5C et 5D) ;

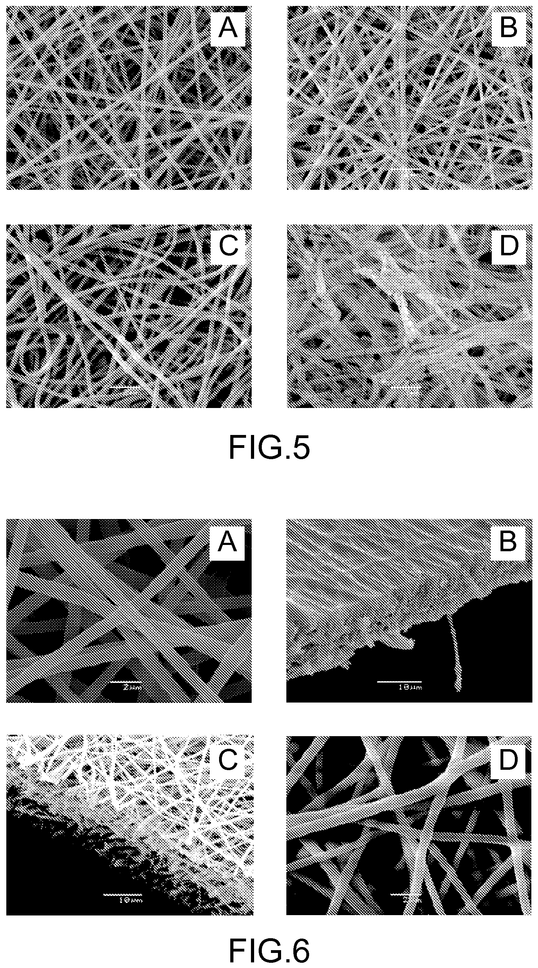

Les échelles représentées sur les Figures 5A à 5D sont de 2 µm.

- Les Figures 6A à 6D sont des images obtenues par microscopie électronique à balayage (MEB) des membranes hybrides PEOS/PVDF-HFP obtenues dans l'exemple 2 ne faisant pas partie de l'invention, comprenant l'un des traitements thermiques de vieillissement suivants :
- Vieillissement de la membrane à une température de 25°C pendant une nuit (Figure 6A); ou bien
- Vieillissement de la membrane à une température de 70°C pendant une nuit (Figure 6B); ou bien
- Vieillissement de la membrane à une température de 550°C pendant une nuit (Figures 6C et 6D) .

Les échelles portées sur les Figures 6A et 6D représentent 2 µm, et les échelles portées sur les figures 6B et 6C représentent 10 µm.

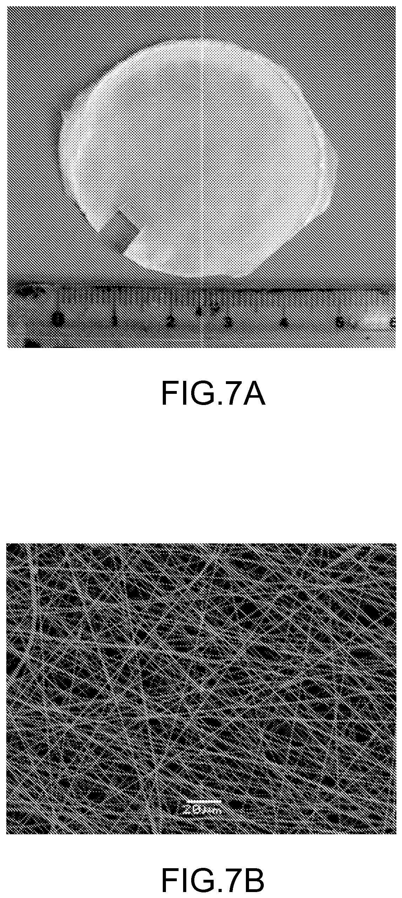

- La Figure 7A est une photographie d'une membrane opaque obtenue dans l'exemple 2 ne faisant pas partie de l'invention à partir de solutions de PEOS/PVDF-HDP.

L'échelle portée sur la Figure 7A est une règle graduée en centimètres.
- La Figure 7B est une image MEB de la membrane opaque de la Figure 7A.

L'échelle portée sur la Figure 7B représente 20 µm.

### EXPOSÉ DÉTAILLÉ DE L'INVENTION.

La description qui suit est plutôt faite en relation avec le procédé de préparation de nanofibres selon l'invention.

On décrit donc dans ce qui suit un procédé de préparation selon l'invention de nanofibres d'un matériau hybride organique-inorganique conducteur présentant une phase organique polymérique et une phase minérale mésoporeuse, ainsi qu'éventuellement une troisième phase de tensio-actif.

Précisons que par nanofibres, on entend généralement des fibres d'une longueur de 1 µm à 50 mm, de préférence de 1 µm à 100 µm et dont la plus grande dimension de la section, qui est le diamètre dans le cas d'une section circulaire, est généralement de 10 à 500 nm, de préférence de 10 à 100 nm.

Ce procédé comprend, tout d'abord, des étapes au cours desquelles on prépare les diverses solutions traitantes introduites dans le ou les réacteur(s) du système d'extrusion électro-assistée.

### 1.a Préparation d'une solution S1 d'un précurseur minéral, inorganique A.

La synthèse du matériau selon l'invention débute par la préparation d'une solution S1 d'au moins un précurseur minéral, inorganique A et/ou d'au moins un composé précurseur organométallique C qui va(vont) constituer l'architecture du réseau mésoporeux minéral.

Le précurseur A peut être choisi parmi les sels de métaux, les sels de métalloïdes, les alcoxydes de métaux, les alcoxydes de métalloïdes.

En particulier, le précurseur A peut être choisi parmi les sels et alcoxydes de métalloïdes, les sels et alcoxydes de métaux de transition, et les sels et alcoxydes de lanthanides, comme les sels et alcoxydes de silicium, titane, zirconium, hafnium, aluminium, tantale, étain, europium, cérium, zinc, magnésium, yttrium, lanthane et gadolinium.

Ce précurseur A est dilué dans un solvant ou mélange de solvants. Le choix de ce solvant ou de ce mélange de solvants est généralement effectué en fonction des propriétés visco-élastiques imposées par le procédé d'extrusion électro-assistée mis en œuvre selon l'invention, et du milieu de miscibilité du polymère utilisé par la suite.

Généralement, le ou les solvants est(sont) choisi(s) parmi les solvants peu volatils. Par peu volatils, on entend que ce ou ces solvant(s) a(ont) généralement une tension de vapeur inférieure à l'éthanol.

Typiquement, le ou les solvants est(sont) choisi(s) parmi les alcools, les amides, les éthers, les aldéhydes et les cétones miscibles ou partiellement miscibles à l'eau et peu volatils. Des solvants préférés sont le THF, le DMF, la NMP, la MEK, le dioxane.

Le composé organométallique précurseur C est généralement un composé qui comporte des fonctions hydroxyles ou des fonctions hydrolysables de type alcoxydes, et des fonctions non hydrolysables ou greffées.

Il est à noter que par composé organométallique, on entend les composés comprenant un métal mais aussi les composés comprenant un métalloïde.

Le composé organométallique C peut répondre, par exemple, à la formule R¹ₓR²_{y}MOR³_{(n-(x+y))}, ou à la formule ZR¹ₓZR²_{y}M'OR³_{(n-(x+y))}, dans lesquelles M et M' représentent un métalloïde ou un métal tel qu'un métal de transition ou un lanthanide.

M et M' pourront par exemple être choisis parmi le silicium, le titane, le zirconium, le hafnium, l'aluminium, le tantale, l'étain, l'europium, le cérium, le zinc, le magnésium, l'yttrium, le lanthane et le gadolinium.

n est le degré de valence du métal, généralement n peut aller de 1 à 10.

X et Y peuvent aller généralement de 0 ou 1 à 10.

Z est une fonction complexante de type monodentate, telle qu'une fonction acétate, phosphonate, phosphate, ou une fonction de type bidentate choisie par exemple parmi les β-dicétones et leurs dérivés, et les α ou β-hydroxyacides.

Dans ces deux formules, R¹, R², et R³ sont des substituants organiques choisis par exemple parmi H, les groupes alkyle notamment de 1 à 10 C, et les groupes aryle, notamment de 6 à 10 C.

Un ou plusieurs parmi les substituants R¹, R², et R³ peut(peuvent) comporter un ou plusieurs groupement(s) échangeur(s) de cations tels que des groupements -SO₃M", -PO₃M"₂, -COOM'', ou -B(OM")₂, dans lesquels M" représente H, un cation métallique monovalent choisi par exemple parmi le lithium, le sodium, le potassium, ou un groupement -N⁺R⁴₃, où chaque R⁴ représente indépendamment H, un groupe alkyle notamment de 1 à 10 C, ou un groupe aryle notamment de 6 à 10 C; ou un ou plusieurs groupement(s) précurseur(s) de groupement(s) échangeur(s) de cations tels que des groupements SO₂X, COX, ou PO₃X₂, où X représente F, Cl, Br, I ou OR⁵ , où R⁵ représente un groupe alkyle notamment de 1 à 10 C, ou aryle notamment de 6 à 10 C ; ou un ou plusieurs groupement(s) échangeur (s) d'anions tels que des groupements -⁺NR⁶₃X'⁻, ou X' représente un anion tel que par exemple F, Cl, Br, I, NO₃, SO₄H ou OR⁷, où R⁷ représente un groupe alkyle notamment de 1 à 10 C, ou un groupe aryle notamment de 6 à 10 C, et où chaque R⁶ représente indépendamment H, un groupe alkyle notamment de 1 à 10 C, ou un groupe aryle notamment de 6 à 10 C, ou des groupements -⁺NR₇X', où X' est tel que défini plus haut et R⁷ est un groupement qui forme avec l'azote ⁺N un cycle de 4 à 10 chaînons comportant des atomes de carbone et d'azote tels qu'un cycle imidazolinium, pyridinium ou pyrazolium.

Des groupements échangeurs de cations préférés sont les groupements -SO₃M' et les groupements -PO₃M"₂ et des groupements précurseurs de groupements échangeurs de cations préférés sont les groupements - SO₂X ou -PO₃X.

Un groupement échangeur d'anions préféré est le groupement imidazolinium.

La solution S1 peut ne comprendre qu'un ou plusieurs précurseurs(s) A ou bien la solution S1 peut ne comprendre qu'un ou plusieurs précurseur(s) C, ou bien la solution S1 peut comprendre un ou plusieurs précurseur(s) A et un ou plusieurs précurseur(s) C.

Ainsi, on pourra commencer par préparer une solution du ou des précurseur(s) (purement) métallique(s) A et ajouter à cette solution une fraction molaire du ou des précurseur(s) C.

Ou bien, le ou les précurseur(s) C peut(peuvent) être ajouté(s) au solvant ou aux solvants même temps que le(s) précurseur(s) (purement) métallique(s) A.

Lorsque la solution S1 contient à la fois un ou plusieurs précurseur(s) métallique(s) A et un ou plusieurs précurseur(s) organométallique(s) C, le métal ou le métalloïde du précurseur A et le métal ou le métalloïde du précurseur C sont choisis de manière à être identiques.

La concentration du précurseur A ou la concentration du précurseur C ou la concentration totale du précurseur A et du précurseur C dans la solution S1 est généralement de 1 à 40%, de préférence de 1,5 à 30% en masse. Il est à noter que les concentrations sont généralement 15 à 320 fois plus élevées que les concentrations mises en œuvre dans les procédés classiques tels que le dépôt par « dip coating ».

A la solution qui contient le ou les précurseur(s) A et le ou les précurseur(s) C, on ajoute le ou les agent(s) structurant(s), texturant(s) D.

Le choix de l'agent structurant, texturant dépend à la fois de la mésostructure souhaitée, par exemple cubique, hexagonale, lamellaire, vésiculaire ou vermiculaire, de la taille des pores et des murs de cette mésostructure, et de sa solubilisation dans le solvant utilisé pour les autres composés de la présente invention, à savoir le polymère, le précurseur ou les précurseurs A, et/ou le précurseur ou les précurseurs C.

On utilisera généralement des agents texturants tensio-actifs de type ionique, comme les sels d'alkyltriméthylammonium, par exemple le bromure de cétyltriméthylammonium ou les sels d'alkylphosphates et d'alkylsulfonates ; ou des acides comme l'acide dibenzoyltartrique, l'acide maléique, et les acides gras à chaîne longue ; ou des bases comme l'urée et les amines à longue chaîne alkyle, pour construire des édifices mésoporeux dont la taille des pores se limite, par exemple à un ou quelques nanomètres, par exemple 1,6 à 10 nm, et la taille des murs également à un ou quelques nanomètres, par exemple 1 nm à 20 nm, notamment environ 1 nm.

On peut utiliser aussi des phases lyotropiques constituées de copolymères multibloc amphiphiles comportant au moins un bloc hydrophobe associé à au moins un bloc hydrophile typiquement comme les Pluronic^{®}, par exemple le Pluronic^{®} F 123 ou le Pluronic^{®} F 127 , à base de PEO (oxyde de polyéthylène) et PPO (oxyde de polypropylène) de type (EO)ₙ-(PO)ₘ-(EO)ₙ, les copolymères de type ((EO)ₙ-(PO)ₘ)ₓ-NCH₂CH₂N-((EO)ₙ-(PO)ₘ)ₓ (Tetronic^{®}), les composés de formule Cₙ(EO)ₘ(OH) (où Cₙ est une chaîne alkyle et/ou aryle par exemple de 1 à 20 C, de préférence de 6 à 20 C, où EO est l'oxyde d'éthylène, et où m est un entier par exemple de 10 à 200, par exemple les composés Brij^{®}, Triton^{®}, Tergitol^{®} ou Igepal^{®}, et les composés de formule (EO)ₘ-sorbitan-Cₙ (Tween^{®}) pour préparer des phases mésoporeuses de plus grande taille de pores, par exemple pouvant aller jusqu'à 50 nm.

Ces différents blocs pourront également être de nature acrylique PMAc (poly(acide méthacrylique) ou PAAc (poly(acide acrylique), aromatique PS (Polystyrène), vinylique PQVP (polyvinylpyridine), PVP (polyvinylpyrrolidone), PVEE (polyvinyléther), ou autre PDMS (polysiloxane).

Ces différents blocs peuvent être fonctionnalisés par un ou plusieurs groupement(s) conducteur(s) de type échangeurs de cations ; ou un ou plusieurs groupement(s) précurseur(s) de groupement(s) échangeur(s) de cations ; ou un ou plusieurs groupement(s) échangeur(s) d'anions ; ou un ou plusieurs groupement (s) précurseur(s) de groupement(s) échangeur(s) d'anions. Ces groupements peuvent être notamment choisis parmi les groupements déjà énumérés plus haut. Citons par exemple le PSS (acide poly (styrènesulfonique)).

Le ou les agent(s) structurant(s) D choisi(s) peut (peuvent) être ajouté(s) directement à la solution qui contient le ou les précurseur(s) A et le ou les précurseur(s) C ou bien le ou les agent(s) D peut(peuvent) être préalablement dissout(s) ou dilué(s) en milieu hydro-alcoolique ou dans un mélange de solvant à base aqueuse compatible avec le milieu de dilution du polymère et du précurseur métallique.

La concentration du ou des agent(s) structurant(s) D dans la solution S1 est généralement de 1 à 20% en masse.

La solution S1 est hydrolysée en milieu catalytique basique durant une durée déterminée qui peut s'étendre de une à quelques minutes jusqu'à une ou plusieurs heures (2, 6, 12, 18, 24, 48 heures), par exemple de 12 à 18 heures en fonction du choix du précurseur métallique.

Notamment dans le cas des précurseurs métalliques à forte réactivité, tels que les précurseurs à base de zirconium ou de titane, un agent chélatant B, comme l'acétylacétone, l'acide acétique ou les phosphonates, peut être introduit pour contrôler l'hydrolyse-condensation du réseau inorganique.

### 1.b Préparation de la solution S2 d'au moins un polymère organique E.

Le polymère organique E est généralement choisi pour ses propriétés mécaniques, pour sa stabilité chimique et/ou pour sa non-miscibilité dans la solution traitante S1.

Ce polymère est dilué ou gonflé avec un solvant ou mélange de solvants choisi(s) de préférence parmi les alcools, éthers, amides, aldéhydes et cétones miscibles ou partiellement miscibles à l'eau.

Le ou les polymère(s) organique(s) sera(seront) généralement choisi(s) parmi les polyéthercétones (PEK, PEEK, PEEKK) ; les polysulfones (PSU), par exemple le Udel^{®} ; les polyéthersulfones, par exemple le VITREX^{®} ; les polyphényléthersulfones (PPSU), par exemple le Radel^{®} ; les copolymères styrène/éthylène (SES), styrène/butadiène (SBS), styrène/isoprène (SIS), par exemple le KRATON^{®} ; les polyphénylènes, tels que les poly(sulfure de phénylènes) et les poly(oxyde de phénylènes) ; les polyimidazoles, tels que les polybenzimidazoles (PBI) ; les polyimides (PI) ; les polyamideimides (PAI) ; les polyanilines ; les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylènes) ; les poly(acide (méth)acryliques) ; les polyacrylamides ; les polyvinyles, tels que les poly(esters de vinyle), par exemple les polyvinylacétates, les polyvinylformates, les polyvinylpropionates, les polyvinyllaurates, les polyvinylpalmitates, les polyvinylstéarates, les polyvinyltriméthylacétates, les polyvinylchloroacétates, les polyvinyltrichloroacétates, les polyvinyltrifluoroacétates, les polyvinylbenzoates, les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE), par exemple le TEFLON^{®} ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

Ces différents polymères peuvent comprendre un ou plusieurs groupement(s) conducteur(s) de type échangeurs de cations ; ou un ou plusieurs groupement(s) précurseur(s) de groupement(s) échangeur(s) de cations ; ou un ou plusieurs groupement(s) échangeur(s) d'anions ; ou un ou plusieurs groupement(s) précurseur(s) de groupement(s) échangeur(s) d'anions. Ces groupements peuvent être notamment choisis parmi les groupements déjà énumérés plus haut.

La concentration du ou des polymère(s) organique(s) dans la solution S2 est généralement de 1 à 50%, de préférence de 1 à 30%.

### 1.d Préparation de la solution hybride organique-inorganique surfactée F

La solution précurseur à base de tensio-actif D est ajoutée à température ambiante à la solution polymère E. Après homogénéisation du milieu, la solution précurseur à base de composant inorganique A comportant une fraction molaire X de C (par exemple 0≤X≤0,4) est ajoutée à température ambiante au milieu réactionnel goutte à goutte. L'agitation à température contrôlée de l'ambiante au reflux est maintenue durant quelques heures. Ce mûrissement de la solution hybride organique-inorganique peut-être prolongé plusieurs jours selon le choix du polymère et du réseau inorganique. La composition de la formulation est généralement [A_{(1-X)}-C_{X}]-D_{Y}-E_{Z}-(H₂O)ₕ où Y= mol(D)/[mol[A_{(1-X)}-C_{X}])+mol(D) et 0≤Y≤0,2 et où Z=g(E)/[g(MO₂)+g(E)] et 0≤Z≤0,9.

### 2. Préparation de nanofibres hybrides organiques-inorganiques

Conformément à l'invention, on dépose la solution S1 et la solution S2 sur un support en réalisant l'extrusion électro-assistée simultanée, séparée de la solution S1 et de la solution S2 avec un dispositif d'extrusion électro-assistée bicapillaire ; ou bien en réalisant l'extrusion électro-assistée d'un mélange de la solution S1 et de la solution S2 avec un dispositif d'extrusion électro-assistée monocapillaire.

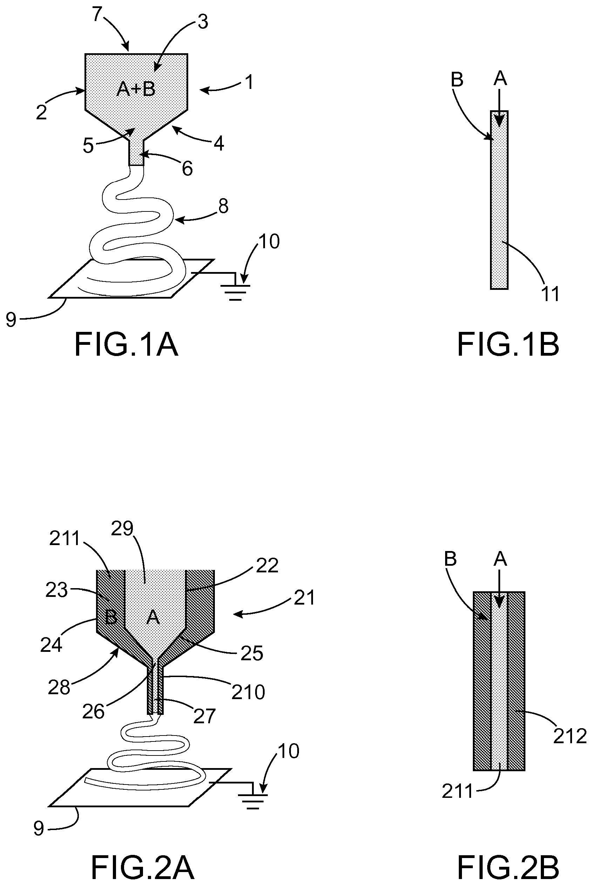

Le dispositif d'extrusion électro-assistée monocapillaire comprend un réacteur ou seringue contenant la solution à extruder relié à une aiguille métallique. Un tel dispositif est bien connu de l'homme du métier dans ce domaine de la technique et est représenté sur la Figure 1A.

Précisons que sur les figures, les références A, B et C désignent pour ce qui concerne les dispositifs (Figures 1A, 2A, 3A, 4A) respectivement les les solutions S1, S2 et S3 et pour ce qui concerne les fibres, respectivement les phases A, B, C, obtenues à partir de ces solutions.

Le réacteur ou seringue (1) a généralement la forme d'un réservoir cylindrique vertical (2) à section circulaire et à extrémité supérieure ouverte qui contient la solution à extruder (3). L'extrémité inférieure du réservoir a la forme d'un tronc de cône (4) convergeant vers un orifice inférieur de section généralement circulaire (5) se poursuivant par un tube creux ou aiguille (6).

Un piston exerce une pression sur la surface supérieure (7) de la solution (3) contenue dans la seringue ou réacteur (1), moyennant quoi la solution est expulsée (8) par l'orifice situé à l'extrémité de l'aiguille (6).

L'aiguille (6) est alimentée par une haute tension, et il se crée ainsi un champ électrique entre l'aiguille (6) de la seringue et un substrat appelé collecteur (9) jouant le rôle de contre-électrode, généralement relié à la terre (10). Le collecteur (9) peut être en un matériau conducteur ou semi-conducteur. Le collecteur (9) peut être de formes et de tailles variables. Ainsi, le collecteur (9) peut-il être cylindrique, plan ou circulaire. Le collecteur peut être statique, fixe, ou il peut être dynamique et être animé d'un mouvement de rotation ou de translation. L'aiguille (6) peut être positionnée avec un angle Θ, généralement de 0° à 45° par rapport au collecteur (9).

Dans le cas où le procédé selon l'invention est réalisé avec un dispositif d'extrusion monocapillaire tel que celui représenté sur la Figure 1, le réacteur, seringue du dispositif contient un mélange (3) des solutions S1 et S2 définies plus haut dans lequel le polymère E et les précurseurs A et/ou C sont uniformément répartis au niveau moléculaire avant l'extrusion, et c'est donc ce mélange qui est soumis à l'extrusion électro-assistée.

On obtient ainsi, lorsque l'on met en œuvre un dispositif d'extrusion monocapillaire, des fibres composites représentées sur la figure 1B comprenant une matrice de polymère (11, phase B) dans laquelle la phase inorganique, minérale mésoporeuse (phase A) est répartie de manière discrète.

Le réacteur d'extrusion électro-assistée bicapillaire (21) représenté sur la figure 2A, comprend deux réacteurs ou seringues imbriqués, par exemple un premier réacteur ou seringue peut être constitué par un premier cylindre vertical à section circulaire tel que décrit plus haut, et le deuxième réacteur peut être constitué par l'espace (23) défini entre les parois (22) de ce premier réacteur et les parois (24) d'un cylindre de plus grand diamètre entourant le premier cylindre. L'extrémité inférieure du premier réacteur a la forme d'un tronc de cône (25) convergeant vers un orifice inférieur de section généralement circulaire (26) se poursuivant par un tube creux (27). L'extrémité inférieure de la paroi du second réacteur a également la forme d'un tronc de cône convergeant (28) entourant le tronc de cône (25) et se terminant par une paroi tubulaire entourant le tube creux (27).

Dans le réacteur d'extrusion électro-assistée bicapillaire, l'aiguille comprend donc un tube creux central (27) par lequel est expulsée la solution (29) contenue dans le premier réacteur et ce tube creux central de section généralement circulaire (27) est entouré par un tube annulaire (210) concentrique au premier tube creux central (27), par lequel est expulsée la solution (211) contenue dans le deuxième réacteur simultanément et séparément de la première solution.

Dans le cas où le procédé selon l'invention est réalisé avec un dispositif d'extrusion bicapillaire tel que celui représenté sur la Figure 1B, la solution S1 (A) est généralement contenue dans le premier réacteur, tandis que la solution S2 (B) est généralement contenue dans le deuxième réacteur. Les deux solutions S1 et S2 sont extrudées indépendamment, séparément, et simultanément, respectivement par le premier orifice central de l'aiguille et par le deuxième orifice annulaire concentrique de l'aiguille.

On obtient, lorsque l'on met en œuvre un dispositif d'extrusion électro-assistée bicapillaire des fibres hybrides représentées sur la figure 2B, dans lesquelles un cœur (212) en phase minérale mésoporeuse (phase A) est entouré d'une enveloppe, gaine concentrique (213) en polymère organique (phase B). De telles fibres ne font pas partie de l'invention.

L'extrusion des deux solutions S1 et S2 est séparée, indépendante mais simultanée. Du fait que ces deux solutions sont extrudées par des orifices concentriques, il ne se forme pas d'une part une fibre à partir de la solution S1 et d'autre part une fibre à partir de la solution S2 mais bien une seule fibre unitaire, hybride ayant la structure décrite ci-dessus et sur la figure 2B.

L'homme du métier concernant la structure d'un dispositif d'extrusion assistée bicapillaire sait que lorsqu'un tel dispositif est mis en œuvre, on n'obtient pas simultanément deux types de fibre mais bien un seul type de fibre.

Le dispositif d'extrusion électro-assistée mis en œuvre selon l'invention, qu'il s'agisse d'un dispositif monocapillaire ou bicapillaire peut être éventuellement couplé à un dispositif de pulvérisation (« spray-coating » en anglais) (31, 41) comme cela est représenté sur les figures (3A)et (4A)

Ce dispositif de pulvérisation est généralement disposé de manière à pulvériser par une buse (32, 42) une solution S3 sous la forme d'un aérosol, nébulisat dans le jet (33, 43) sortant de l'aiguille du dispositif d'extrusion électro-assistée de préférence au voisinage de l'orifice ou des orifices de l'aiguille du dispositif d'extrusion électro-assistée.

Cette solution, ou plutôt suspension, S3 est généralement une solution ou plutôt suspension de nanoparticules (34, 44) de métaux et/ou d'oxydes de métaux (phase C). Ces métaux peuvent être choisis parmi l'or, l'argent, le platine, le palladium le nickel, le cuivre, le ruthénium, et le rhodium, et le cobalt.

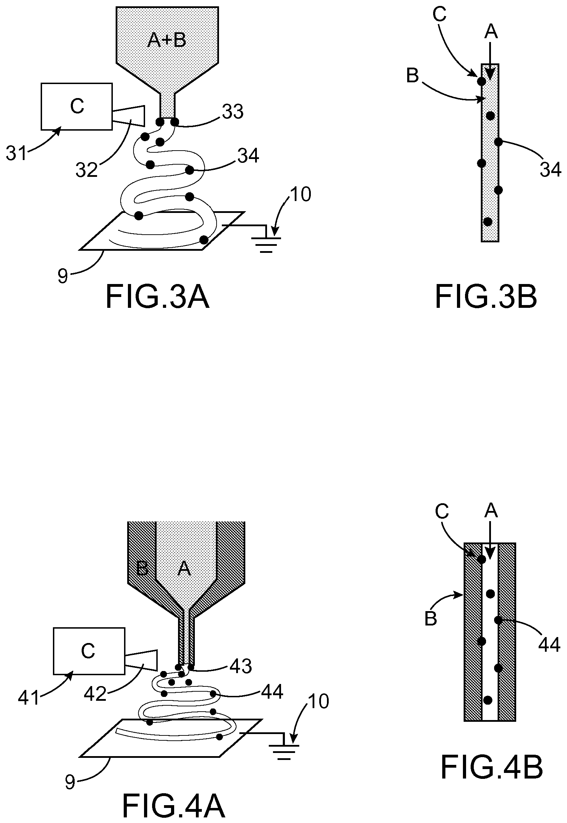

On obtient ainsi des nanofibres de structure analogue à celle des fibres hybrides préparées avec un dispositif d'extrusion électro-assistée représentées sur les figures 1B et 2B mais qui, en outre, sont « décorées » par des nanoparticules (34, 44) de métaux et/ou d'oxydes de métaux. Ces nanofibres sont représentées sur les figures 3B et 4B. Les nanofibres telles que représentées à la figure 4B ne font pas partie de l'invention.

Il est à noter que si l'une ou les deux solution(s) S1 ou S2 contiennent en outre des nanoparticules de métaux et/ou d'oxydes de métaux, ces nanoparticules peuvent se trouver réparties dans l'ensemble de la phase A ou de la phase B ou dans l'ensemble des deux phases. Dans ce cas, on peut aussi, en plus pulvériser une solution S3 comme décrit plus haut.

Dans le procédé selon l'invention, on effectue un contrôle synchrone multiréactif, c'est-à-dire que l'on maîtrise simultanément les réactions d'hydrolyse-condensation sol-gel ce qui correspond à un contrôle cinétique, l'organisation mésoporeuse des réseaux ce qui correspond à un contrôle thermodynamique, et la rhéologie du mélange qui autorise l'extrusion électro-assistée du mélange.

Ces différents contrôles peuvent être assurés en agissant sur les paramètres relatifs à la solution ou aux solutions à déposer qui ont déjà été définis plus haut et sur les paramètres relatifs au procédé d'extrusion électro-assistée proprement dit.

Ainsi, concernant les paramètres relatifs au procédé d'extrusion, la température d'extrusion électro-assistée est généralement régulée de manière indépendante du ou des réacteurs et du collecteur et se situe généralement dans la plage de 20°C à 200°C, de préférence de 25°C à 100°C, et de préférence encore de 30°C à 70°C.

L'humidité relative du dispositif d'extrusion est régulé dans une plage de 0 à 90%, de préférence de 5 à 90%, et de préférence encore de 5 à 60%.

La tension appliquée à l'aiguille se situe généralement dans une plage de 2 à 25 kV, de préférence de 5 à 20 kV, et de préférence encore de 8 à 15 kV.

La vitesse d'écoulement de la ou des solutions dans la seringue se situe généralement dans une plage de 0,1 à 20 mL/h, de préférence de 0,1 à 10 mL/h.

La distance entre l'aiguille (à savoir généralement le bout, extrémité de l'aiguille) et la contre-électrode (collecteur ou support) est généralement de 2 à 25 cm, de préférence de 10 à 18 cm.

Le dépôt peut se faire sous une atmosphère d'air, d'azote ou d'argon.

Le réglage de la tension appliquée, du débit d'éjection de la solution (équivalent à la vitesse d'écoulement dans la seringue) ainsi que de la distance entre l'aiguille et le collecteur permet de contrôler le diamètre des fibres ainsi que leur texturation.

Une application contrôlée en continu de la tension sera privilégiée pour former des fibres homogènes en diamètre, tandis que des variations ponctuelles et contrôlées de la tension permettront de créer des défauts dans la texturation des fibres et de favoriser la croissance d'un réseau fibreux tridimensionnel.

Les fibres déposées sur le substrat, support, constitué par le collecteur sont ensuite traitées thermiquement à une température entre 50°C et 300°C, de préférence entre 40°C et 200°C, suivant la nature du polymère, généralement pour obtenir une consolidation. Ce traitement peut être appelé traitement de vieillissement et permet selon les conditions mises en œuvre d'obtenir une membrane cohérente dans laquelle les fibres sont généralement collées les unes aux autres.

La durée de ce traitement de consolidation est généralement de 15 min à 24 heures, de préférence de 1 à 15 heures.

Si l'on a procédé à une consolidation alors l'agent texturant, structurant tel qu'un agent tensio-actif qui a servi à la mésostructuration du réseau inorganique et qui se trouve dans les mésopores de la membrane, peut être éventuellement éliminé totalement ou partiellement, de préférence par une méthode douce, comme par exemple un lavage sélectif ou non dans un solvant tel que l'éthanol.

Le lavage peut être réalisé en milieu hydroalcoolique acide.

Une post-réaction pour libérer ou générer une fonction conductrice liée au réseau inorganique peut être réalisée. Typiquement, ce type de post-réaction peut-être :
- une oxydation d'un groupement mercaptan (-SH) par l'eau oxygénée en acide sulfonique SO₃H ou,
- l'hydrolyse d'une fonction dialkylphosphonate (RO)₂(O)P- par HCl directement ou via la formation d'un intermédiaire (Me₃SiO)₂(O)P- puis hydrolyse par le MeOH pour former un acide phosphonique -PO₃H₂.

Cette post-réaction peut également correspondre à un greffage des hydroxyles M-OH de surface du réseau inorganique de la membrane par un organo-alcoxyde métallique. Dans tous ces cas, la membrane est placée en milieu liquide pour permettre son gonflement et la diffusion des entités moléculaires réactives dans les pores de la membrane.

Afin d'éviter toute réaction parasite au sein de la membrane lors du fonctionnement de la pile, la membrane telle qu'une membrane conductrice de protons peut être purifiée par différents lavages par exemple oxydants, acides (ou basiques) et aqueux qui permettent d'éliminer toutes les entités organiques, organominérales ou inorganiques labiles.

La membrane peut être préparée également sous forme de film auto-supporté. Ce film formé est ensuite décollé de son support par gonflement dans un solvant tel que l'eau.

### EXEMPLES

### Exemple 1 ne faisant pas partie de l'invention :

Dans cet exemple, on prépare des fibres hybrides d'oxyde de zirconium et d'un copolymère PVDF-HFP.

0,52 g du tensio-actif Pluronic^{®} F127, et 0,466 g d'un copolymère PVDF-HFP (poly(fluorure de vinylidène co-hexafluoropropène)), la teneur massique de la chaîne hexafluoropropène est comprise entre 5 et 12%) sont additionnés à 0,65 g d'acide acétique (agent chélatant), 4,0 g d'un précurseur de zirconium, le Zr(OiPr)₄ et 4,8 g de DMF.

La solution est agitée toute une nuit afin de dissoudre les précipités de ZrO₂ qui peuvent se former à cause de la présence d'eau résiduelle.

Cette solution (viscosité : 20 cPs, teneur massique du polymère : 4,4%, teneur massique du précurseur de zirconium : 38%) est utilisée pour préparer des fibres hybrides de Pluronic^{®} F127/ZrO₂/PVDF-HFP par extrusion électro-assistée monocapillaire.

Les conditions expérimentales pour obtenir ces fibres sont les suivantes :
- une tension de 15 kV entre l'aiguille et la contre-électrode,
- un débit de 0,4 mL/h,
- 30% d'humidité,
- une température de 27°C dans le milieu réactionnel (c'est-à-dire dans la solution),
- une distance de 11 cm entre l'extrémité de l'aiguille et la contre-électrode.

Les fibres hybrides obtenues sont soumises à l'un des traitements thermiques de vieillissement suivants :
- Chauffage à 70°C pendant 12 heures (Figure 5A) ; ou bien
- Chauffage à 130°C pendant 4 heures (Figure 5B) ; ou bien
- Chauffage à 70°C et extraction du tensio-actif par lavage dans l'éthanol (Figures 5C et 5D).

Les Figures 5A, 5B, 5C, 5D sont des images obtenues par microscopie électronique à balayage (MEB) des fibres de Pluronic^{®} F127/ZrO₂/PVDF-HFP obtenues par extrusion électro-assistée à partir de la solution préparée de la manière décrite plus haut, ces fibres ayant subi en outre l'un des traitements thermiques décrits ci-dessus.

Le diamètre des fibres obtenues est d'environ 260 nm ± 50 nm. Elles sont homogènes en diamètre. Selon le traitement thermique appliqué, elles peuvent présenter une géométrie particulière en forme de colonne vertébrale (Figure 5D).

### Exemple 2 ne faisant pas partie de l'invention :

Dans cet exemple, on prépare des fibres hybrides PEOS/PVDF-HFP qui peuvent se présenter sous la forme d'une membrane.

Les polysiloxanes PEOS sont préalablement synthétisés (eau, TEOS, et acide) par hydrolyse du TEOS en milieu acide dans l'éthanol.

Les trois constituants sont mélangés dans les proportions suivantes : H₂O/Si = 1,7 et pH = 2,5, dans un flacon fermé, puis ils sont agités pendant 3 jours à 70°C.

Le solvant est évaporé de la solution précédente à l'aide d'un « rotavapeur ».

La solution ainsi obtenue est transparente, visqueuse (1000 cPs) et est séchée sous vide à l'ambiante pour obtenir une poudre blanche.

On prépare ensuite la solution soumise à l'extrusion électro-assistée de la manière suivante : on solubilise la poudre blanche préparée ci-dessus dans un mélange THF/DMF (50/50 en masse). A cette solution est additionné le copolymère (PVDF-HFP) (4,4% en masse), et le surfactant (Pluronic^{®} F127, 15,9%).

Cette solution de viscosité élevée (100 cPs) est soumise à l'extrusion électro-assistée.

La solution soumise à l'extrusion électro-assistée a la composition suivante : 450 mg de Pluronic^{®} F127 ; 125 mg de PVDF-HFP ; 750 mg de PEOS préparé avec un rapport molaire H₂0/Si de 1,7 ; 1,5 g de DMF ; sa viscosité est de 100 cPs.

L'extrusion électro-assistée se fait sous une tension de 11 kV, avec un débit de 0,5 mL/h, à température ambiante, et sous une humidité relative (« RH ») d'environ 70% RH.

La distance entre l'extrémité de l'aiguille et la contre-électrode est de 13 cm. La membrane est obtenue après un temps d'extrusion de 30 minutes.

On soumet ensuite les membranes obtenues à l'un des traitements thermiques de vieillissement suivants :
- Vieillissement de la membrane à une température de 25°C pendant une nuit ; ou bien
- Vieillissement de la membrane à une température de 70°C pendant une nuit; ou bien
- Vieillissement de la membrane à une température de 550°C (pendant 2 heures à une nuit).

Les Figures 6A, 6B, 6C et 6D présentent des images obtenues par microscopie électronique à balayage (MEB) des membranes hybrides PEOS/PVDF-HFP obtenues par extrusion électro-assistée à partir de la solution préparée de la manière décrite plus haut, ces membranes ayant subi en outre l'un des traitements thermiques de vieillissement décrits ci-dessus.

La morphologie de la membrane dépend de sa température de vieillissement après synthèse. Un traitement à température ambiante (25°C) toute une nuit entraîne la formation de fibres individuelles dont on peut considérer cependant qu'elles forment un tissu membranaire, qui est un élément intéressant pour la partie électrode, avec un diamètre d'environ 1 µm (Figure 6A).

Au contraire, le traitement de ces fibres à 70°C toute une nuit donne lieu à la formation d'une membrane avec des fibres collées les unes aux autres (Figure 6B).

Enfin, lors du traitement de ces fibres à 550°C, le polymère est éliminé et l'on obtient un tissu de fibres de silice (Figures 6C et 6D).

La membrane opaque des Figures 7A et 7B a été obtenue dans les conditions déjà décrites ci-dessus : vieillissement à la température ambiante, humidité : 70% , distance aiguille contre-électrode : 13 cm, temps d'extrusion : 30 minutes, tension : 11 kV.

### Exemple 3 ne faisant pas partie de l'invention :

Dans cet exemple, on prépare des membranes à base de CSPTMS (chlorosulfonylphényltriméthoxysilane)/PVDF-HFP/PEO.

Le CSPTMS est un composé bifonctionnel de type organométallique, tel qu'il a été défini plus haut.

Le polyoxyéthylène (POE) est utilisé comme agent structurant.

Des polyoxyéthylènes de poids moléculaire variable (10,000; 1,000,000; 16,000) sont additionnés à des solutions contenant le mélange CSPTMS/PVDF-HFP afin d'obtenir 50% en masse de PVDF-HFP (poly(fluorure de vinylidène co-hexafluoropropène)), la teneur massique de la chaîne hexafluoropropène est comprise entre 5 et 12%).

L'extrusion des différentes solutions a lieu sous une tension de 12,4 kV, avec une distance entre l'extrémité de l'aiguille et la contre-électrode de 10 à 11 cm, un taux d'humidité variable allant de 0 à 20% RH, et avec un débit de 0,15-0,3 ml/h, à température ambiante, pendant une heure.

Les membranes obtenues sont flexibles, opaques avec des épaisseurs d'environ 20 µm. L'épaisseur est réglée principalement par le temps durant lequel, quel que soit le PEO, la solution est pulvérisée.

Des mesures de conductivité 4 points ont été réalisées sur ces membranes.

Pour la membrane préparée à partir de polyéthylène glycol de poids moléculaire 10,000, les conductivités protoniques mesurées sont de 100 mS/cm à 80°C sous 100 kPa, tandis que la conductivité est de 43 mS/cm pour une membrane préparée avec un poly(oxyde d'éthylène) de poids moléculaire 1,000,000.

Les fibres et membranes des exemples présentent une phase minérale avec un réseau mésoporeux structuré à porosité ouverte, qui est tel que défini dans la description donnée plus haut, notamment en ce qui concerne la taille des pores. La taille des pores a été caractérisée par Microscopie Electronique à Transmission (MET) et/ou par diffraction des rayons X (DRX aux bas angles) et/ou par adsorption de gaz (BET).

La mésostructure est caractérisée par diffraction des rayons X (DRX) aux bas angles.

Les mesures réalisées sur les fibres et membranes des exemples montrent des valeurs de la taille des pores de la phase minérale en accord avec celles données dans la description.

Les diffractogrammes réalisés sur les fibres et membranes des exemples montrent la présence d'une mésostructuration de la phase minérale.

### REFERENCES

[1]
   a) S.-S. Choi, S.G. Lee, S.S. Im, SM. Kim, J Mater. Sci Lett. 2003, 22, 891.
   b) W. Kataphinan, R. Teye-Mensah, E.A. Evans, RiD. Ramsier, D.H. Reneker, D.J. Smith, J Vac. Sci Technol, A 2003, 21 1574.
[2] G. Larsen, R. Velarde-Ortiz, K. Minchow, A. Barrero, I.G. Loscertales, J. Am. Chem. Soc. 2003, 125, 1154.
[3]
   a) Y. Wang, R. Furlan, I. Ramos, J.I. Santigano-Aviles, Appl Phys. A 2004 78, 1043.
   b) Y. Wang, J.J. Santigano-Aviles, Nanotechnology 2004, 15, 32.
[4]
   a) S. Madhugiri, W. Zhou, J.P. Ferraris, K.J. Balkus, Jr., Microporous Mesoporous Mater. 2003, 63, 75.
   b) S. Madhugiri, A. Chacko, J.P. Ferraris, K.J. balkus Jr., Polym. Prepr. (Am. Chem. Soc., Div. Polym. Chem.) 2003, 44, 86.
   c) M; Maclas, A. Chacko, J.P. Ferraris, K.J. Balkus Jr.
[5]
   a) D.Li, Y. Xia, *Nano Lett.* 2003, 3, 555.
   b) D.Li, Y. Wang, Y. Xia, *Nano lett.* 2003, 3, 1167.
   c) D. Li, T. Herricks, Y. Xia, *Appl. Phys. Lett.* 2003, 83, 4586.
[6]
   a) H. Dai, J. Gong, H. Kim, D. Lee, Nanotechnology 2002, 13, 674.
   b) P. Viswanathamurthi, N. Bhattarai, H. Y. Kim, D.R. Lee, S.R. Kim, M.A. Morris, Chem. Phys. Lett. 2003, 374, 79.
   c) C. Shao, H.-Y Kim, J. Gong, B. Ding, D. R Lee, S.-J. Park, Mater. Lett. 2003, 57, 1579.
   d) H. Guan, C. Shao, B. Chen, J. Gong, X. Yang, Inorg. Chem. Comm. 2003, 6, 1409.
   e) H. Guan, C. Shao, B. Chen, J. Gong, X. Guan, Inorg. Chem. Comm. 2003, 6, 1302.
   f) X. Yang, C. Shao, H. Guan, X. Li, J. Gong, Inorg. Chem. Comm. 2004, 7, 176.
   g) B. Ding, H. Kim, C. Kim, M. Khil, S. Park, Nanotechnology 2003, 14, 532.
   h) P. Viswanathamurthi, N. Bhattarai, H.Y. Kim. D.R. Lee, Scr. Mater. 2003, 49, 577.
   i) H. Guan, C. Shao, S. Wen., B. Chen, J. Gong, X. Yang, Mater. Chem. Phys. 2003, 6, 1302.
   j) P.I. Gourma, Rev. Adv. Mater. Sci 2003, 5, 147.
   k) N. Dharmaraj, H.C. Park, B.M. Lee, P. Viswanathamurthi, H.Y. Kim, D.R. Lee, Inorg. Chem. Comm. 2004, 7, 431.
[7]
   a) K.J. Senecal, D.P. Ziegler, J.He, R. Mosurkal, H. Schreuder-Gibson, L.A. Samuelson, Mater. Res. Soc. Symp. Proc. 2002, 788, 285.
   b) A. Pedicini, R.J. Farris, J. Polym. Sci, Polym. Phys. Ed. 2004, 42, 752.
   c) N. Viriyabanthorn, J.L. Mead, R.G. Stacer, C. Sung, *Polym. Prepr. (Am. Chem.* Soc. *Div. Polym. Chem.)* 2003, 44, 136.
   d) Q.B. Yang, D.M. Li, Y.L. Hong, Z.Y. Li, C. Wang, S.L. Qiu, Y. Wei, Synth. Met. 2003, 137, 973.
   e) H. Yang, L. Loh, T. Han, F. Ko, Polym Prepr (Am. Chem. Soc., Div. Polym. Chem.) 2003, 44, 163.
[8]
   a) H. Hou, Z. Jun, A. Reuning, A. Shaper, J.H. Wendorff, A. Geriner, Macromolecule 2002, 16, 2429.
   b) H. Hou, D.H. reneker, Adv. Mater. 2004, 16, 69.
   c) X. Hao, Z. Li, C. Wang, Polym. Prep. (Am. Chem. Soc., Div. Polym. Chem.) 2003, 44, 149.
[9]
   a) F. Ko, Y. Gogotsi, AA. Ali, N. Naguib, H. Ye, G. Yang, C.Li, P. Willis, Adv. Mater. 2003, 15, 1161.
   b) Y. Dror, W. Salalha, R.L. Khatin, Y. Cohen, A.L. Yarin, E. Zussman, Langmuir 2003, 19, 7012,
   c) C. Seoul, Y.-T Kim, C.-K Baek, J Polym. Sci, Polym. Phys. Ed. 2003, 41, 1572.
   d) J.A. Stuckey, M.D. Alexander, Jr., B.M. Black, J.D. Henes, Polym. Prepr. (Am. Chem. Soc., Dic. Polym. Chem.) 2003, 44, 141.
   e) R. Sen, B. Zhao, D. Perea, M.E. Itkis, H. Hu, J. Love, E. Bekyarova, R.C. Haddon, Nano Lett. 2004, 4, 459.
[10]
   a) Y.K. Luu, K. Kim, B.S. Hsiao, B. Chu, M. Hadjiargyrou, J Controlled Release 2003, 89, 341.
   b) J. Zeng, X. Xu, X. Chen, Q. Liang, X. Bian, L. Yang, X. Jing, J Controlled Release 2003, 92, 227.
[11] E.H. Sanders, R. Kloefkorn, G.L. Bowlin, D.G. Simpson, G.E. Wnek, Macromolecules 2003, 36, 3803.
[12]
   a) K. Kim, C. Chang, X. Zong, D. Fang, B.S. Hsiao, B; Chu, M. Hadjiargyrou, Polym. Prep. (Am. Chem. Soc., Div. Polym. Chem.) 2003, 44, 98.
   b) C. Drew, X. Wang, L;A. Samuelson, J. Kumar, J Macromol Sci, Pure Appl Chem. 2003, A40, 1415.
[13]
   a) R.H. Baughman, A.A. Zakhidov, W.A. de Heer, Science 2002, 297, 787.
   b) R. Tenne, Angew. Chem. Int. Ed. 2003, 42, 5124.
   c) C.R. Martin, Science 1994, 266, 1961.
   d) J; Goldberger, R.He, Y. Zhang, S. Lee, H. Yan, H.-J. Choi, P. Yang, Nature 2003, 422, 599.
   e) B. Mayers, X; Jiang, D. Sunderland, B. Cattle, Y. Xia, J. Am. Chem. Soc. 2003, 125, 13 364.
   f) M. Steinhart, Z. Jia, K. Schaper, R.B. Wehrspohn, U. Gösele, J.H. Wendorff, Adv. Mater 2003, 15, 706.
   g) Y. Sun, Y. Xia, Adv. Mater 2004, 16, 264.
[14]
   a) R.A. Caruso, J.H. Schattka, A. Greiner, Adv. Mater 2001, 13, 1577;
   b) H. Dong, S. Prasad, V. Nyame, W.E. Jones, Jr., Chem. Mater 2004, 16, 371.
   c) F. Ochanda, A. Atkinson, W.E. Jones, Jr. Polym. Prepr (Am. Chem. Soc., Div. Polym. Chem.)2003, 44, 161.
[15] M. Wei, J. Mead, C. Sung, Polym. Prepr (Am. Chem. Soc., Div. Polym. Chem.) 2003, 44, 79.
[16]
   a) Z. Sun, E. Zussman, A.L. Yarin, J.H. Wendorff, A. Greiner, Adv. Mater. 2003, 15, 1929.
   b) D. Li, Y. Xia, Nano. Lett. 2004, 4, 933.
   c) I.G. Loscertales, A. Barrero, M. Marquez, R. Spretz, R. Velarde-Ortiz, G. Larsen, J. Am. Chem. Soc. 2004, 126, 5376.
[17] M. Bognitzki, T. Frese, M. Steinhart, A. Greiner, J.H. Wendorff, A. Schaper, M. Hellwig, Polym. Eng. Sci 2001, 41, 982.
[18]
   a) M. Bognitzki, W. Czado, T; Frese, A. Schaper, M; Hellwig, M. Steinhart, A. Greiner, J.H. Wendorff, Adv. Mater 2001, 13, 70.
[19]
   a) S. Megelski, J.S. Stephens, D.B. Chase, J.F. rabolt, Macromolecules 2002, 35, 8456.
   b) C.L. Casper, J.S; Stephens, N.G; Tassi, D.B. Chase, J.F. Rabolt, Macromolecules 2004, 37, 573.
[20] S. Madhugiri, A. Dalton, J. Gutierrez, J.P. Ferraris, K.J. Balkus, JACS 2003, 125, 14531.
[21] J.Choi, K. Min Lee, R. Wycisk, P. N. Pintauro, P. T. Mather, Macromolecules 2008, 41, 4569. H. Chen, J. D. Snyder, Y. A. Elabd, Macromolecules 2008, 41, 128.
[22] E. Formo, E. Lee, D. Campbell, Y. Xia, Nanoletters, 2008, 8, 668.

## Revendications

1. Nanofibres hybrides organiques-inorganiques comprenant deux phases :
- une première phase minérale comprenant un réseau mésoporeux structuré à porosité ouverte ; et
- une deuxième phase organique comprenant un polymère organique, ladite phase organique n'étant pas présente à l'intérieur des pores du réseau mésoporeux structuré ;
dans lesquelles la phase minérale présente des fonctions chimiques organiques conductrices et hydrophiles, et dans lesquelles la phase organique présente des fonctions chimiques organiques conductrices et/ou hydrophiles,
dans lesquelles la phase minérale est discontinue et dispersée dans la phase organique qui est continue.

2. Nanofibres selon la revendication 1, dans lesquelles lesdites fonctions chimiques organiques de la phase minérale se trouvent à la surface des pores et sont liées de façon covalente aux parois du réseau mésoporeux.

3. Nanofibres selon la revendication 1, comprenant en outre une troisième phase, à l'intérieur des pores, constituée par au moins un agent structurant, texturant, présentant éventuellement des fonctions chimiques organiques conductrices et/ou hydrophiles ; de préférence l'agent texturant, structurant est choisi parmi les surfactants, tels que les sels d'alkyltriméthylammonium, d'alkylphosphates et d'alkylsulfonates ; les acides comme l'acide dibenzoyltartrique, l'acide maléique, les acides gras à chaîne longue ; les bases comme l'urée et les amines à chaîne longue ; les phospholipides ; les copolymères doublement hydrophiles dont l'amphiphilie est générée « in situ » par interaction avec un substrat ; les copolymères multibloc amphiphiles comportant au moins un bloc hydrophobe associé à au moins un bloc hydrophile.

4. Nanofibres selon l'une quelconque des revendications 1 à 3, dans lesquelles lesdites fonctions conductrices sont choisies parmi les groupes échangeurs de cations et/ou les groupes échangeurs d'anions.

5. Nanofibres selon l'une quelconque des revendications précédentes, comprenant, en outre, de préférence sur au moins une de leurs surfaces, de préférence encore sur au moins une de leurs surfaces extérieures, des nanoparticules catalytiques, de préférence des nanoparticules métalliques et/ou d'oxyde(s) métallique(s).

6. Nanofibres selon l'une quelconque des revendications précédentes, dans lesquelles la phase minérale est constituée par au moins un oxyde choisi parmi les oxydes de métaux, les oxydes de métalloïdes et les oxydes mixtes de ceux-ci, tels que les oxydes de silicium, titane, zirconium, hafnium, aluminium, tantale, étain, zinc, magnésium, terres rares ou lanthanides tels qu'europium, cérium, yttrium, lanthane et gadolinium, et les oxydes mixtes de ceux-ci.

7. Nanofibres selon l'une quelconque des revendications précédentes, dans lesquelles le réseau mésoporeux présente une structure organisée avec un motif de répétition ; de préférence le réseau mésoporeux présente une structure cubique, hexagonale, lamellaire, vermiculaire, vésiculaire ou bicontinue.

8. Nanofibres selon l'une quelconque des revendications précédentes, dans lesquelles la taille des pores du réseau mésoporeux est de 1 à 100 nm, de préférence de 2 à 50 nm.

9. Nanofibres selon l'une quelconque des revendications précédentes, dans lesquelles le polymère organique est un polymère thermostable choisi de préférence parmi les polyéthercétones (PEK, PEEK, PEEKK) ; les polysulfones (PSU) ; les polyéthersulfones ; les polyphényléthersulfones (PPSU) ; les copolymères styrène/éthylène (SES), styrène/butadiène (SBS), styrène/isoprène (SIS) ; les polyphénylènes, tels que les poly(sulfure de phénylène) et les poly(oxyde de phénylène) ; les polyimidazoles, tels que les polybenzimidazoles (PBI) ; les polyimides (PI) ; les polyamideimides (PAI) ; les polyanilines ; les polypyrroles ; les polysulfonamides ; les polypyrazoles, tels que les polybenzopyrazoles ; les polyoxazoles, tels que les polybenzoxazoles ; les polyéthers, tels que les poly(oxyde de tétraméthylène) et les poly(oxyde d'hexaméthylène) ; les poly(acide (méth)acryliques) ; les polyacrylamides ; les polyvinyles, tels que les poly(esters de vinyle), par exemple les polyvinylacétates, les polyvinylformates, les polyvinylpropionates, les polyvinyllaurates, les polyvinylpalmitates, les polyvinylstéarates, les polyvinyltriméthylacétate, les polyvinylchloroacétates, les polyvinyl trichloroacétates, les polyvinyl trifluoroacétates, les polyvinylbenzoates les polyvinylpivalates, les polyvinylalcools ; les résines acétales, telles que les polyvinylbutyrales ; les polyvinylpyridines ; les polyvinylpyrrolidones ; les polyoléfines, telles que les polyéthylènes, les polypropylènes, les polyisobutylènes ; les poly(oxyde de styrène) ; les résines fluorées et les polyperfluorocarbones, tels que les polytétrafluoroéthylènes (PTFE) ; les poly(fluorure de vinylidènes) (PVDF) ; les polychlorotrifluoroéthylènes (PCTFE) ; les polyhexafluoropropènes (HFP) ; les perfluoroalcoxydes (PFA) ; les polyphosphazènes ; les élastomères siliconés ; les copolymères séquencés comprenant au moins une séquence constituée par un polymère choisi parmi les polymères ci-dessus.

10. Membrane comprenant les nanofibres selon l'une quelconque des revendications précédentes, éventuellement déposées sur un support.

11. Électrode comprenant les nanofibres selon l'une quelconque des revendications 1 à 9.

12. Pile à combustible comprenant au moins une membrane selon la revendication 10 et/ou une électrode selon la revendication 11.

13. Procédé de préparation de nanofibres hybrides organiques-inorganiques, selon l'une quelconque des revendications 1 à 9, dans lequel on réalise les étapes suivantes :
a) on prépare au moins une solution, dans un solvant, d'un précurseur minéral A et/ou d'un précurseur organométallique C destiné à constituer la phase minérale ; de préférence le précurseur A est choisi parmi les sels de métaux, les sels de métalloïdes, les alcoxydes de métaux, et les alcoxydes de métalloïdes ;
b) on ajoute à la solution préparée dans l'étape a), au moins un agent D structurant, texturant de la phase minérale mésoporeuse, moyennant quoi on obtient une solution S1; et on hydrolyse en milieu catalytique basique et on laisse mûrir ladite solution S1;
c) on prépare une solution S2 d'un polymère organique E dans un solvant ;
d) on réalise l'extrusion électro-assistée simultanée, séparée de la solution S1 et de la solution S2 avec un dispositif d'extrusion électro-assistée bicapillaire ; ou bien l'extrusion électro-assistée d'un mélange, éventuellement mûri, de la solution S1 et de la solution S2 avec un dispositif d'extrusion monocapillaire ; lesdits dispositifs comprenant au moins une seringue contenant la ou les solution(s) reliée(s) à une aiguille à laquelle est appliquée une tension, et un collecteur ou support, moyennant quoi on obtient un dépôt de nanofibres hybrides organiques-minérales sur le collecteur ou support ;
e1) on effectue un traitement thermique à une température entre 50°C et 300°C pour réaliser une consolidation des nanofibres déposées ;
f) éventuellement à l'issue de l'étape e1), on élimine totalement ou partiellement l'agent D structurant, texturant ;
g) éventuellement à l'issue de l'étape e1) ou de l'étape f), on sépare ou on élimine le support ; procédé dans lequel le polymère et/ou l'agent structurant, texturant D sont porteurs de fonctions chimiques organiques conductrices et/ou hydrophiles et/ou de fonctions précurseurs de ces fonctions chimiques organiques conductrices et/ou hydrophiles, et le composé précurseur organométallique C, est un composé porteur d'une part, de fonctions chimiques organiques conductrices et hydrophiles ou de fonctions précurseurs de ces fonctions chimiques organiques, et, d'autre part, de fonctions susceptibles de se lier à la surface des pores du réseau mésoporeux.

14. Procédé selon la revendication 13, dans lequel on ajoute en outre un agent chélatant B, tel que l'acétylacétone ou l'acide acétique à la solution S1.

15. Procédé selon la revendication 13 ou 14, dans lequel la solution S1, la solution S2, ou le mélange des solutions S1 et S2, ont une viscosité de 40 à 7000 cps à 20°C.

16. Procédé selon l'une quelconque des revendications 13 à 15, dans lequel la concentration de la solution S1 en précurseur minéral A et/ou en précurseur organométallique C et la concentration de la solution S2 en polymère E, exprimées en extrait sec sont de 15 à 60% en masse, de préférence de 15 à 30% en masse.

17. Procédé selon l'une quelconque des revendications 13 à 16, dans lequel les solvants des solutions S1 et S2 sont des solvants peu volatils dont la tension de vapeur est inférieure à celle de l'éthanol.

18. Procédé selon l'une quelconque des revendications 13 à 17, dans lequel on laisse mûrir la solution S1 à une température de 0°C à 300°C, de préférence de 20°C à 200°C ; à une pression de 100 Pa à 5.10⁶ Pa, de préférence de 1 000 Pa à 2.10⁵ Pa ; pendant une durée de quelques minutes à quelques jours, de préférence d'une heure à une semaine, de préférence encore de 12 à 18 heures.

19. Procédé selon l'une quelconque des revendications 13 à 18, dans lequel, préalablement à l'extrusion électro-assistée, la solution S1 et/ou la solution S2 sont préchauffées à une température de 40°C à 80°C, de préférence de 60°C à 70°C.

20. Procédé selon l'une quelconque des revendications 13 à 19, dans lequel l'extrusion électro-assistée est contrôlée en agissant sur un ou plusieurs, et de préférence tous, parmi les paramètres suivants :
- la température de dépôt ;
- l'humidité relative de l'atmosphère dans laquelle est réalisé le dépôt;
- la tension appliquée à l'aiguille ;
- la vitesse d'écoulement des solutions ou du mélange dans la seringue ;
- la distance entre l'aiguille et le collecteur ou support ;
- l'atmosphère dans laquelle est réalisé le dépôt ;
de préférence un ou plusieurs, et de préférence tous, parmi les paramètres est(sont) choisi(s) conformément à ce qui suit :
- Température de dépôt : 20°C à 200°C, de préférence 25°C à 100°C, et de préférence encore 30°C à 70°C ;
- Humidité relative de l'atmosphère dans laquelle est réalisé le dépôt : 0 à 90%, de préférence 5 à 90%, et de préférence encore 5 à 60% ;
- Tension appliquée à l'aiguille : 2 à 25 kV, de préférence 5 à 20kV, et de préférence encore, 8 à 15 kV ;
- Vitesse d'écoulement des solutions ou du mélange dans la seringue : 0,1 à 20 mL/h, de préférence 0,1 à 10 mL/h ;
- Distance entre l'aiguille et le collecteur ou support : 2 à 25 cm, de préférence 10 à 18 cm ;
- Atmosphère dans laquelle est réalisé le dépôt : Air, Azote ou Argon ;

21. Procédé selon l'une quelconque des revendications 13 à 20, dans lequel la solution S1 et/ou la solution S2 comprend(comprennent) des nanoparticules catalytiques, de préférence des nanoparticules métalliques et/ou d'oxydes métalliques.

22. Procédé selon l'une quelconque des revendications 13 à 21, dans lequel on pulvérise une suspension de nanoparticules catalytiques, de préférence des nanoparticules de métaux et/ou d'oxydes de métaux dans le(s) jet(s) sortant de l'aiguille du dispositif d'extrusion électro-assistée.

23. Procédé selon l'une quelconque des revendications 13 à 22, dans lequel le procédé comprend, en outre, une étape finale de traitement pour libérer ou générer des fonctions chimiques organiques telles que des fonctions conductrices et/ou hydrophiles sur la surface des pores des nanofibres.

## Patentansprüche

1. Organisch-anorganische Hybrid-Nanofasern bestehend aus zwei Phasen:
- einer ersten Mineralphase, die ein offenporiges, strukturiertes mesoporöses Netz umfasst; und
- einer zweiten organischen Phase, die ein organisches Polymer umfasst, wobei die organische Phase nicht in den Poren des strukturierten mesoporösen Netzes vorhanden ist;
wobei die mineralische Phase leitende und hydrophile organische chemische Funktionen aufweist und wobei die organische Phase leitende und/oder hydrophile organische chemische Funktionen aufweist,
wobei die Mineralphase diskontinuierlich und in der organischen Phase, die kontinuierlich ist, dispergiert ist.

2. Nanofasern nach Anspruch 1, wobei sich die organischen chemischen Funktionen der Mineralphase an der Oberfläche der Poren befinden und kovalent mit den Wänden des mesoporösen Netzes verbunden sind.

3. Nanofasern nach Anspruch 1, ferner umfassend eine dritte Phase innerhalb der Poren, bestehend aus mindestens einem texturierenden Strukturierungsmittel, möglicherweise mit leitenden und/oder hydrophilen organischen chemischen Funktionen; vorzugsweise ist das texturierende Strukturierungsmittel aus Tensiden ausgewählt, wie Alkyltrimethylammoniumsalzen, Alkylphosphaten und Alkylsulfonaten; Säuren wie Dibenzoylweinsäure, Maleinsäure, langkettigen Fettsäuren; Basen wie Harnstoff und langkettigen Aminen; Phospholipiden; doppelt hydrophilen Copolymeren, deren Amphiphilie "in situ" durch Interaktion mit einem Substrat erzeugt wird; amphiphilen Multiblock-Copolymeren, die mindestens einen hydrophoben Block enthalten, der mit mindestens einem hydrophilen Block verbunden ist.

4. Nanofasern nach einem der Ansprüche 1 bis 3, wobei die leitenden Funktionen aus den Kationenaustauschergruppen und/oder den Anionenaustauschergruppen ausgewählt sind.

5. Nanofasern nach einem der vorhergehenden Ansprüche, ferner umfassend, vorzugsweise an mindestens einer ihrer Oberflächen, vorzugsweise noch an mindestens einer ihrer Außenflächen, katalytische Nanopartikel, vorzugsweise Metallnanopartikel und/oder Metalloxidnanopartikel.

6. Nanofasern nach einem der vorhergehenden Ansprüche, wobei die Mineralphase aus mindestens einem Oxid besteht, das aus Metalloxiden, Metalloidoxiden und Mischoxiden davon ausgewählt ist, wie beispielsweise Oxiden von Silizium, Titan, Zirkonium, Hafnium, Aluminium, Tantal, Zinn, Zink, Magnesium, Seltenen Erden oder Lanthaniden wie Europium, Cer, Yttrium, Lanthan und Gadolinium und Mischoxiden davon.

7. Nanofasern nach einem der vorhergehenden Ansprüche, wobei das mesoporöse Netz eine organisierte Struktur mit einem Wiederholungsmuster aufweist; vorzugsweise weist das mesoporöse Netz eine kubische, sechseckige, lamellare, vermikuläre, vesikuläre oder bikontinuierliche Struktur auf.

8. Nanofasern nach einem der vorhergehenden Ansprüche, wobei die Porengröße des mesoporösen Netzes 1 bis 100 nm, vorzugsweise 2 bis 50 nm beträgt.

9. Nanofasern nach einem der vorhergehenden Ansprüche, wobei das organische Polymer ein thermostabiles Polymer ist, bevorzugt ausgewählt aus Polyetherketonen (PEK, PEEK, PEEKK); Polysulfonen (PSU); Polyethersulfonen; Polyphenylethersulfonen (PPSU); Styrol/Ethylen-Copolymeren (SES), Styrol/Butadien (SBS), Styrol/Isopren (SIS); Polyphenylenenen, wie Poly(phenylensulfid) und Poly(phenylenoxid); Polyimidazolen, wie Polybenzimidazolen (PBI); Polyimiden (PI); Polyamidimiden (PAI); Polyanilinen; Polypyrrolen; Polysulfonamiden; Polypyrazolen, wie Polybenzopyrazolen; Polyoxazolen, wie Polybenzoxazolen; Polyethern, wie Poly(tetramethylenoxid) und Poly(hexamethylenoxid); Poly(methacrylsäure); Polyacrylamiden; Polyvinylen, wie z. B. Poly(vinylestern), z. B. Polyvinylacetaten, Polyvinylformiaten, Polyvinylpropionaten, Polyvinyllauraten, Polyvinylpalmitaten, Polyvinylstearaten, Polyvinyltrimethylacetaten, Polyvinylchloracetaten, Polyvinyltrichloracetaten, Polyvinyltrifluoracetaten, Polyvinylbenzoaten, Polyvinylpivalaten, Polyvinylalkoholen, Acetalharzen wie Polyvinylbutyralen, Polyvinylpyridinen; Polyvinylpyrrolidonen; Polyolefinen, wie z. B. Polyethylenen, Polypropylenen, Polyisobutylenen; Poly(styroloxiden); fluorierten Harzen und Polyperfluorkohlenstoffen, wie Polytetrafluorethylenen (PTFE); Poly(vinylidenfluoriden) (PVDF); Polychlortrifluorethylenen (PCTFE); Polyhexafluorpropenen (HFP); Perfluoralkoxiden (PFA); Polyphosphazenen; silikonisierten Elastomeren; wobei die sequenzierten Copolymere mindestens eine Sequenz umfassen, die aus einem Polymer besteht, das aus den oben genannten Polymeren ausgewählt ist.

10. Membran, die die Nanofasern nach einem der vorhergehenden Ansprüche umfasst, die eventuell auf einem Träger abgelegt sind.

11. Elektrode, umfassend die Nanofasern nach einem der Ansprüche 1 bis 9.

12. Brennstoffzelle, die mindestens eine Membran nach Anspruch 10 und/oder eine Elektrode nach Anspruch 11 umfasst.

13. Verfahren zur Zubereitung organisch-anorganischer Hybrid-Nanofasern nach einem der Ansprüche 1 bis 9, wobei die folgenden Schritte durchgeführt werden:
a) Zubereiten mindestens einer Lösung eines mineralischen Vorläufers A und/oder eines organometallischen Vorläufers C, der zur Bildung der mineralischen Phase bestimmt ist, in einem Lösungsmittel; vorzugsweise ist der Vorläufer A aus Metallsalzen, Metalloidsalzen, Metallalkoxiden und Metalloidalkoxiden ausgewählt;
b) Hinzufügen der in Schritt a) zubereiteten Lösung mindestens eines texturierenden Strukturierungsmittels D der mesoporösen Mineralphase, wodurch eine Lösung S1 erhalten wird; und Hydrolysieren in einem basischen katalytischen Medium und Reifenlassen der Lösung S1;
c) Zubereiten einer Lösung S2 eines organischen Polymers E in einem Lösungsmittel;
d) gleichzeitiges elektrounterstütztes Extrudieren, getrennt von Lösung S1 und Lösung S2 mit einer zweikapillaren elektrounterstützten Extrusionsvorrichtung; oder das elektrounterstützte Extrudieren einer eventuell reifen Mischung aus Lösung S1 und Lösung S2 mit einer einkapillaren Extrusionsvorrichtung; wobei die Vorrichtungen mindestens eine Spritze umfassen, die die Lösung(en) enthält und mit einer Nadel verbunden ist, an die eine Spannung angelegt wird, und einen Kollektor oder Träger, wodurch eine Ablagerung von organisch-mineralischen Hybrid-Nanofasern auf dem Kollektor oder Träger erreicht wird;
e1) Durchführen einer Wärmebehandlung bei einer Temperatur zwischen 50°C und 300°C, um eine Konsolidierung der abgelagerten Nanofasern zu erreichen;
f) eventuell am Ende von Schritt e1), vollständiges oder teilweises Entfernen des texturierenden Strukturierungsmittels D;
g) gegebenenfalls nach Abschluss von Schritt e1) oder Schritt f), Trennen oder Entfernen des Trägers;
Verfahren, bei dem das Polymer und/oder das Strukturierungsmittel D Träger leitender und/oder hydrophiler organischer chemischer Funktionen und/oder Vorläuferfunktionen dieser leitenden und/oder hydrophilen organischen chemischen Funktionen sind, und die organometallische Vorläuferverbindung C eine Trägerverbindung einerseits leitender und hydrophiler organischer chemischer Funktionen oder Vorläuferfunktionen dieser organischen chemischen Funktionen ist, und andererseits, Funktionen, die sich an die Oberfläche der Poren des mesoporösen Netzes binden können.

14. Verfahren nach Anspruch 13, wobei ferner ein Chelatbildner B, wie Acetylaceton oder Essigsäure, der Lösung S1 hinzugefügt wird.

15. Verfahren nach Anspruch 13 oder 14, wobei die Lösung S1, die Lösung S2 oder das Mischen der Lösungen S1 und S2 eine Viskosität von 40 bis 7000 cps bei 20 °C aufweisen.

16. Verfahren nach einem der Ansprüche 13 bis 15, wobei die Konzentration der Lösung S1 im mineralischen Vorläufer A und/oder als organometallischer Vorläufer C und die Konzentration der Lösung S2 im Polymer E, ausgedrückt als Trockenextrakt, 15 bis 60 Massenprozent, vorzugsweise 15 bis 30 Massenprozent, beträgt.

17. Verfahren nach einem der Ansprüche 13 bis 16, wobei die Lösungsmittel der Lösungen S1 und S2 niedrigflüchtige Lösungsmittel sind, deren Dampfdruck niedriger ist als der von Ethanol.

18. Verfahren nach einem der Ansprüche 13 bis 17, wobei die Lösung S1 bei einer Temperatur von 0°C bis 300°C, vorzugsweise von 20°C bis 200°C; bei einem Druck von 100 Pa bis 5,10⁶ Pa, vorzugsweise von 1000 Pa bis 2,10⁵ Pa; über einen Zeitraum von wenigen Minuten bis wenigen Tagen, vorzugsweise von einer Stunde bis zu einer Woche, vorzugsweise noch von 12 bis 18 Stunden reifen gelassen wird.

19. Verfahren nach einem der Ansprüche 13 bis 18, wobei vor dem elektrounterstützten Extrudieren die Lösung S1 und/oder die Lösung S2 auf eine Temperatur von 40°C bis 80°C, vorzugsweise von 60°C bis 70°C, vorgewärmt werden.

20. Verfahren nach einem der Ansprüche 13 bis 19, wobei das elektrisch unterstützte Extrudieren durch Einwirken eines oder mehrerer, und vorzugsweise aller, der folgenden Parameter gesteuert wird:
- Aufdampftemperatur
- die relative Luftfeuchtigkeit der Atmosphäre, in der die Ablagerung erfolgt;
- die an der Nadel anliegende Spannung;
- die Flussrate der Lösungen oder des Gemischs in der Spritze
- den Abstand zwischen der Nadel und dem Kollektor oder des Trägers;
- die Atmosphäre, in der die Ablagerung erfolgt;
vorzugsweise einer oder mehrere, und vorzugsweise alle, der Parameter gemäß dem Folgenden ausgewählt ist/sind:
- Ablagetemperatur: 20°C bis 200°C, vorzugsweise 25°C bis 100°C, und vorzugsweise noch 30°C bis 70°C;
- Relative Luftfeuchtigkeit der Atmosphäre, in der die Ablagerung erfolgt: 0 bis 90%, vorzugsweise 5 bis 90% und vorzugsweise noch 5 bis 60%;
- Spannung an der Nadel: 2 bis 25 kV, vorzugsweise 5 bis 20 kV, und noch bevorzugt 8 bis 15 kV;
- Durchflussgeschwindigkeit der Lösungen oder des Gemischs in der Spritze: 0,1 bis 20 mL/h, vorzugsweise 0,1 bis 10 mL/h;
- Abstand zwischen Nadel und Verteiler oder Träger: 2-25 cm, vorzugsweise 10-18 cm;
- Atmosphäre, in der die Ablagerung erfolgt: Luft, Stickstoff oder Argon;

21. Verfahren nach einem der Ansprüche 13 bis 20, wobei die Lösung S1 und/oder die Lösung S2 katalytische Nanopartikel, vorzugsweise metallische Nanopartikel und/oder Metalloxide, umfasst.

22. Verfahren nach einem der Ansprüche 13 bis 21, wobei eine Suspension von katalytischen Nanopartikeln, vorzugsweise Metallnanopartikel und/oder Metalloxidnanopartikel, in den Strahl/die Strahlen gesprüht wird, der/die aus der Nadel der elektrisch unterstützten Extrusionsvorrichtung austritt.

23. Verfahren nach einem der Ansprüche 13 bis 22, wobei das Verfahren ferner einen letzten Verarbeitungsschritt zur Freisetzung oder Erzeugung organischer chemischer Funktionen wie leitende und/oder hydrophile Funktionen auf der Oberfläche der Nanofaserporen umfasst.

## Claims

1. Organic-inorganic hybrid nanofibres comprising two phases:
- a first mineral phase comprising a structured mesoporous network with open porosity; and
- a second organic phase comprising an organic polymer, said organic phase being not present inside the pores of the structured mesoporous network;
wherein the mineral phase has organic chemical conductive and hydrophilic functional groups, and wherein the organic phase has organic chemical conductive and/or hydrophilic functional groups,
wherein the mineral phase is discontinuous, and dispersed in the organic phase, which is continuous.

2. Nanofibres according to claim 1, wherein said organic chemical functional groups of the mineral phase are located at the surface of the pores, and are bonded covalently to the walls of the mesoporous network.

3. Nanofibres according to claim 1, further comprising a third phase, inside the pores, consisting of at least one structuring, texturizing agent, optionally having organic chemical functional conductive and/or hydrophilic groups; preferably the structuring agent is chosen from among the surfactants, such as the salts of alkyltrimethyl ammonium, alkylphosphates and alkylsulfonates; acids such as dibenzoyl tartaric acid, maleic acid, the long-chain fatty acids; bases such as urea and the long-chain amines; phospholipids; doubly, twice, hydrophilic copolymers the amphiphilia of which is generated "in situ" by interaction with a substrate; amphiphilic multi-block copolymers including at least one hydrophobic block associated with at least one hydrophilic block.

4. Nanofibres according to any one of claims 1 to 3, wherein said conductive functional groups are chosen from among the cation exchange groups and/or the anion exchange groups.

5. Nanofibres according to any one of the preceding claims, further comprising, preferably on at least one of their surfaces, and even more preferably on at least one of their external surfaces, catalytic nanoparticles, preferably metallic nanoparticles and/or metal oxide(s) nanoparticles.

6. Nanofibres according to any of the preceding claims, wherein the mineral phase consists of at least one oxide chosen from among the metal oxides, the metalloid oxides, and the mixed oxides thereof, such as the oxides of silicon, titanium, zirconium, hafnium, aluminium, tantalum, tin, zinc, magnesium, rare earths or lanthanides such as europium, cerium, yttrium, lanthanum and gadolinium, and the mixed oxides thereof.

7. Nanofibres according to any one of the preceding claims, wherein the mesoporous network has an organised structure with a repeating unit ; preferably the mesoporous network has a cubic, hexagonal, lamellar, vermicular, vesicular or bicontinuous structure.

8. Nanofibres according to any one of the preceding claims, wherein the size of the pores of the mesoporous network is 1 to 100 nm, and preferably 2 to 50 nm.

9. Nanofibres according to any one of the preceding claims, wherein the organic polymer is a thermostable polymer preferably chosen from among the polyether ketones (PEK, PEEK, PEEKK); the polysulfones (PSU); the polyethersulfones; the polyphenyl ether sulfones (PPSU); the styrene/ethylene (SES), styrene/butadiene (SBS) and styrene/isoprene (SIS) copolymers; the polyphenylenes, such as the poly(phenylene sulfides) and the poly(phenylene oxides); the polyimidazoles, such as the polybenzimidazoles (PBI); the polyimides (PI); the polyamideimides (PAI); the polyanilines; the polypyrroles; the polysulfonamides; the polypyrazoles, such as the polybenzopyrazoles; the polyoxazoles, such as the polybenzoxazoles; the polyethers, such as the poly(tetramethylene oxides) and the poly(hexamethylene oxides); the poly((meth)acrylic acids); the polyacrylamides; the polyvinyls, such as the poly(vinyl esters), for example the polyvinyl acetates, the polyvinyl formates, the polyvinyl propionates, the polyvinyl laurates, the polyvinyl palmitates, the polyvinyl stearates, the polyvinyl trimethylacetates, the polyvinyl chloroacetates, the polyvinyl trichloroacetates, the polyvinyl trifluoroacetates, the polyvinyl benzoates, the polyvinyl pivalates, the polyvinyl alcohols; the acetal resins, such as the polyvinyl butyrals; the polyvinyl pyridines; the polyvinyl pyrrolidones; the polyolefines, such as the polyethylenes, the polypropylenes, the polyisobutylenes; the poly(styrene oxides); the fluorinated resins and the polyperfluorocarbons, such as the polytetrafluoroethylenes (PTFE); the poly(vinylidene fluorides) (PVDF); the polychlorotrifluoroethylenes (PCTFE); the polyhexafluoropropenes (HFP); the perfluoroalkoxides (PFA); the polyphosphazenes; the silicone elastomers; the block copolymers including at least one block consisting of a polymer chosen from among the above polymers.

10. Membrane comprising the nanofibres according to any one of the preceding claims, optionally deposited on a support.

11. Electrode comprising the nanofibres according to any one of claims 1 to 9.

12. Fuel cell comprising at least one membrane according to claim 10 and/or one electrode according to claim 11.

13. Method of preparing organic-inorganic hybrid nanofibres, according to any one of claims 1 to 9, wherein the following steps are carried out:
a) at least one solution is prepared, in a solvent, of a mineral precursor A and/or of an organometallic precursor C intended to constitute the mineral phase; preferably the precursor A is chosen from among the metal salts, the metalloid salts, the metal alkoxides, and the metalloid alkoxides;
b) at least one structuring, texturizing agent D of the mesoporous mineral phase is added to the solution prepared in step a), whereby a solution S1 is obtained; and, optionally, said solution S1 is hydrolysed in basic catalytic medium and left to age;
c) a solution S2 of an organic polymer E is prepared in a solvent;
d) simultaneous, separate electrically assisted extrusion of solution S1 and of solution S2 is carried out with a bicapillary electrically assisted extrusion device; or alternatively the electrically assisted extrusion of a mixture, optionally aged, of solution S1 and solution S2 is carried out with a monocapillary extrusion device; wherein said devices comprise at least one syringe containing the solution(s) connected to a needle to which a voltage is applied, and a manifold or support, whereby a deposit of organic-inorganic hybrid nanofibres is obtained on the manifold or support;
e1) heat treatment is carried out at a temperature between 50°C and 300°C to consolidate the deposited nanofibres;
f) optionally, on conclusion of step e1, the structuring, the texturizing agent D is totally or partially eliminated;
g) optionally, on conclusion of step e1) or step f) the support is separated or eliminated; method in which the polymer and/or structuring, texturizing agent D carries (carry) organic chemical conductive and/or hydrophilic functional groups and/or precursor functional groups of these organic chemical conductive and/or hydrophilic functional groups, and the organomineral precursor compound C is a compound carrying, on the one hand, organic chemical conductive and hydrophilic functional groups, or precursor functional groups of these organic chemical functional groups and, on the other hand, functional groups which may become bonded to the surface of the pores of the mesoporous network.

14. Method according to claim 13, wherein a chelating agent B such as acetylacetone or acetic acid is also added to solution S1.

15. Method according to claim 13 or 14, wherein solution S1, solution S2, or a mixture of solutions S1 and S2, have a viscosity of 40 to 7,000 cps at 20°C.

16. Method according to any one of claims 13 to 15, wherein the concentration in solution S1 of mineral precursor A and/or of organomineral precursor C, and the concentration in solution S2 of polymer E, expressed as a dry extract, are 15 to 60% by mass, and preferably 15 to 30% by mass.

17. Method according to any one of claims 13 to 16, wherein the solvents of solutions S1 and S2 are low-volatility solvents, the vapour tension of which is lower than that of ethanol.

18. Method according to any one of claims 13 to 17, wherein solution S1 is left to age at a temperature of 0°C to 300°C, and preferably 20°C to 200°C; at a pressure of 100 Pa to 5.10⁶ Pa, and preferably 1,000 Pa to 2.10⁵ Pa; over a period of several minutes to several days, preferably one hour to one week, and even more preferably 12 to 18 hours.

19. Method according to any one of claims 13 to 18, wherein, prior to the electrically assisted extrusion, solution S1 and/or solution S2 is(are) preheated to a temperature of 40°C to 80°C, and preferably 60°C to 70°C.

20. Method according to any one of claims 13 to 19, wherein the electrically assisted extrusion is controlled by acting on one or more, and preferably on all, of the following parameters:
- the deposition temperature;
- the relative humidity of the atmosphere in which the deposition is carried out;
- the voltage applied to the needle;
- the flow speed of the solutions or of the mixture in the syringe;
- the distance between the needle and the manifold or support;
- the atmosphere in which the deposition is carried out;
preferably one or more, and preferably all, of the parameters is (are) chosen in accordance with the following:
- Deposition temperature: 20°C to 200°C, preferably 25°C to 100°C, and even more preferably 30°C to 70°C;
- Relative humidity of the atmosphere in which the deposition is carried out: 0 to 90%, preferably 5 to 90%, and even more preferably 5 to 60%;
- Voltage applied to the needle; 2 to 25 kV, preferably 5 to 20 kV, and even more preferably 8 to 15 kV;
- Flow speed of the solutions or of the mixture in the syringe: 0.1 to 20 mL/h, and preferably 0.1 to 10 mL/h;
- Distance between the needle and the manifold or support: 2 to 25 cm, and preferably 10 to 18 cm;
- Atmosphere wherein the deposition is carried out: Air, Nitrogen or Argon;

21. Method according to any one of claims 13 to 20, wherein solution S1 and/or solution S2 comprise(s) catalytic nanoparticles, preferably metallic nanoparticles and/or nanoparticles of metal oxides.

22. Method according to any one of claims 13 to 21, wherein a suspension of catalytic nanoparticles, preferably nanoparticles of metals and/or of metal oxides, is spraycoated in the jet(s) coming out of the needle of the electrically assisted extrusion device.

23. Method according to any one of claims 13 to 22, wherein the method also includes a final treatment step to release or generate organic chemical functional groups such as conductive and/or hydrophilic functional groups on the surface of the pores of the nanofibres.
